# EUROPÄISCHE PATENTSCHRIFT

(11) **EP 4 489 968 B1**
(45) Veröffentlichungstag und Bekanntmachung des Hinweises auf die Patenterteilung: **06.05.2026**
(21) Anmeldenummer: 23709693.8
(22) Anmeldetag: 07.03.2023
(51) Int. Cl.: B32B 27/08, B32B 27/32, B29C 33/68

(54) **TIEFZIEHFÄHIGE TRENNFOLIE FÜR FASERVERBUNDKUNSTSTOFF-BAUTEILE**
DEEP-DRAWABLE SEPARATING FILM FOR FIBRE COMPOSITE PLASTIC COMPONENTS
FILM DE SÉPARATION EMBOUTISSABLE PAR EMBOUTISSAGE PROFOND POUR COMPOSANTS EN MATIÈRE PLASTIQUE COMPOSITE À BASE DE FIBRES

(30) Priorität: 10.03.2022 DE 102022105691
(43) Veröffentlichungstag der Anmeldung: 15.01.2025
(73) Patentinhaber: Loparex Germany GmbH & Co. KG, 91301 Forchheim (DE)
(72) Erfinder: HERMANN, Christian, 91330 Eggolsheim (DE); KUNZELMANN, Peter, 91341 Röttenbach (DE); MAUSER, Matthias, 91353 Hausen (DE)
(74) Vertreter: Kutzenberger Wolff & Partner
(86) Internationale Anmeldenummer: PCT/EP2023/055665
(87) Internationale Veröffentlichungsnummer: WO 2023/170022

(56) Entgegenhaltungen:
- WO-A1-2021/094358
- DE-A1- 102013 009 679
- US-A1- 2012 034 404

## Beschreibung

Die Erfindung betrifft eine mehrschichtige Trennfolie, welche eine erste Oberflächenschicht basierend auf einer Mischung von einem thermoplastischen Elastomer und einem Polyolefin, eine zweite Oberflächenschicht basierend auf wenigstens einem Polypropylen oder Propylencopolymer, und eine Haftvermittlerschicht umfasst, wobei die Trennfolie eine Gesamtschichtdicke im Bereich von 10 bis 250 µm aufweist. Die erfindungsgemäße Trennfolie eignet sich zur Herstellung von Faserverbundkunststoff-Bauteilen, insbesondere durch einen Vakuuminfusionsprozess.

Mit Hilfe von Trennfolien bzw. daraus hergestellten Vakuumbeuteln können selbst kompliziert gestaltete Faserverbundkunststoff-Bauteile für unterschiedlichste Anwendungen hergestellt werden, wie z.B. für die Luftfahrt, die Raumfahrt, die Automobil- oder Windenergie-Industrie. Dabei werden härtbare Faserverbundkunststoff-Halbzeuge, z.B. Laminate aus Carbon- oder Glasfasern, welche mit einem auszuhärtenden Kunststoffharz getränkt sind, in einen Vakuumbeutel eingebracht. Der Vakuumbeutel kann dabei prinzipiell aus einer einzelnen Trennfolie gebildet sein, welche das härtbare Faserverbundkunststoff-Halbzeug vollständig umgibt. In der Praxis umfasst der Vakuumbeutel jedoch häufig mehrere Elemente, welche vakuumdicht miteinander verbunden sind.

Bei einigen Technologien sind die Halbzeuge bereits mit Kunststoffharz vorimprägniert (z.B. vorimprägnierte Fasern (Prepregs), vorimprägnierte Metallgitter, etc.), bei anderen Technologien geht man von nicht-vorimprägnierten Halbzeugen aus und imprägniert diese anschließend innerhalb der Vakuumbeutel mit Kunststoffharz (z.B. beim Infusionsverfahren).

Anschließend wird das härtbare Halbzeug durch Evakuierung in das formgebende vakuumdichte Werkzeug gepresst und darin ausreichend verdichtet, so dass Gas- oder Lufteinschlüsse entweichen können und das Laminat möglichst keine Hohlräume aufweist. Die evakuierbare Gesamtvorrichtung aus Vakuumbeutel, formgebendem Werkzeug und verformtem, härtbarem Faserverbundkunststoff-Halbzeug wird anschließend in einem Autoklaven unter Druck und Erhitzen solange bis auf die Aushärtungstemperatur des Kunststoffharzes erwärmt, bis das Kunststoffharz ausgehärtet ist. Nach Abkühlen kann dann das ausgehärtete Faserverbundkunststoff-Bauteil aus dem Vakuumbeutel entnommen und von dem formgebenden vakuumdichten Werkzeug getrennt werden.

Die Herstellung von Faserverbundkunststoff-Bauteilen erfolgt häufig in Formen unter Einsatz von Trennmitteln, um ein Anhaften der eingesetzten, härtbaren Kunststoffharze an den Formen zu verhindern. Insbesondere bei der Fertigung von großflächigen Faserverbundkunststoff-Bauteilen wie z.B. Flügeln von Windkraftanlagen ist der Einsatz solcher Trennmittel zeit- und kostenintensiv.

Die Produktion von Flügeln für Windkraftanlagen erfolgt in den meisten Fällen durch einen Vakuuminfusionsprozess in Formen, welche jeweils die Hälfte eines Flügels abbilden. Dabei werden die Formen mit einem flüssigen Trennmittel bestrichen, um nach dem Aushärten der flüssig eingebrachten härtbaren Kunststoffharze, meist Epoxid- bzw. in selteneren Fällen Polyesterharzsysteme, eine Trennwirkung zwischen dem gehärteten Kunststoffharz des Faserverbundkunststoff-Bauteils und der Form zu erzielen.

Der Einsatz dieser Trennmittel hat viele Nachteile. So besteht das Risiko der Beschädigung der Form aufgrund unzureichender Bedeckung mit Trennmittel. Außerdem muss die Oberfläche des Faserverbundkunststoff-Bauteils aufwendig nachbearbeitet werden, bevor sie mit Farbe und Lack beschichtet werden kann, um eine ausreichende Oberflächengüte zu erreichen. Insbesondere müssen Unebenheiten mit Füllmitteln (sog. *Pore-Filler*) verschlossen und anschließend muss die entsprechend bearbeitete Fläche des Faserverbundkunststoff-Bauteils abgeschliffen werden. Diese Bearbeitung der Oberfläche ist sehr zeit- und kostenintensiv. Der dabei entstehende Feinstaub sowie die eingesetzten Trennmittel als solche stellen zudem ein Gesundheitsrisiko für die Mitarbeiter dar.

WO 2014 124945 A1 betrifft eine silikonisierte Trennfolie für die Herstellung von KunststoffFormteilen aus Faserverbundwerkstoffen unter Verwendung einer Form, umfassend eine bei Raumtemperatur vakuumtiefziehfähige Trägerfolie und eine in flüssiger Form auftragbare Beschichtung, die gegebenenfalls nach dem Entfernen eventueller Lösungsmittel zu mehr als 90 Atom% aus Silizium, Kohlenstoff und/oder Sauerstoff, zu mehr als 45 Atom% aus Kohlenstoff, sowie zu mehr als 20 Atom% aus Silizium besteht, jeweils bezogen auf die gesamte Beschichtung und gemessen durch XPS, dadurch gekennzeichnet, dass die Beschichtung durch Additionsreaktionen, Kondensationsreaktionen oder durch Strahlung vernetzt ist.

US 2017 0066218 A1 und US 2019 0322075 A1 betreffen mehrschichtige Trennfolien, welche eine erste äußere Schicht aufweisen, die Polymethylpenten oder ein fluoriertes Polymer umfasst und eine erste Adhäsionsaffinität aufweist, und eine zweite äußere Schicht, die Polymethylpenten oder ein fluoriertes Polymer und ein die Adhäsion einstellendes Additiv umfasst. Die zweite Außenschicht weist eine zweite Adhäsionsaffinität auf, die sich von der ersten Adhäsionsaffinität der ersten Außenschicht unterscheidet. Der Unterschied in der Adhäsionsaffinität zwischen der ersten und zweiten äußeren Schicht der Trennfolie ermöglicht es der Folie, vollständige Trenneigenschaften von einem Formwerkzeug zu entfalten.

EP 0 364 956 offenbart ein Laminat umfassend (A) eine Schicht eines 4-Methyl-1-penten-Polymers, (B) eine Schicht einer Polymerzusammensetzung, umfassend (a) 40 bis 49 Gew .-% eines statistischen Ethylen / α-Olefin-Copolymers, enthaltend 30 bis 95 Mol-% Ethyleneinheiten, (b) 0,1 bis 20 Gew .-% eines mit einer ungesättigten Carbonsäure oder deren Derivat modifizierten Polyolefins und (d) 1 bis 50 Gew .-% eines Klebrigmachers, wobei die Anteile der Komponenten (a), (b) und (d) auf dem Gesamtgewicht der Komponenten (a), (b) und (d) basieren, und (d) einer Schicht eines thermoplastischen Harzes, wobei die Schichten (A), (B) und (d) in der angegebenen Reihenfolge laminiert werden.

EP 0 376 681 offenbart eine Trennfolie, zusammengesetzt aus einem Laminat, umfassend: (a) eine Zwischenschicht umfassend mindestens eine Schicht aus einem flexiblen Polyolefin, und (b) zwei äußere Schichten aus kristallinem Polymethylpenten, eine auf jeder Seite der Zwischenschicht.

US 5,123,985 betrifft Vakuumbeutel aus thermoplastischen Elastomerfolien, die sich ohne Unterbrechung leicht an die Oberflächenkontur eines Werkstücks bei niedrigen Drücken anpassen. Der thermoplastische Elastomerfilm kann zu dünnen Filmen verarbeitet werden, die hohen Drücken und Temperaturen standhalten.

WO 00/59720 offenbart mehrschichtige polymethylpentenhaltige Trennfolien, Verfahren zu ihrer Herstellung und ihre Verwendung zur Herstellung von Gegenständen, umfassend gehärtete faserverstärkte Epoxid-, Phenol- oder Polyacrylat-Zusammensetzungen, die als Strukturelemente für die Luft- und Raumfahrt verwendet werden können. Die Filme haben verbesserte Trenneigenschaften, wenn sie hohen Temperaturen ausgesetzt werden. Die Filme sind nicht orientiert und mehrschichtig und umfassen eine Polyamidschicht, eine Polymethylpentenschicht und eine dazwischen liegende Klebstoffzwischenschicht. Die Trennfolien weisen eine Gesamtschichtdicke von vorzugsweise 15 bis 30 µm auf und sind daher weder formstabil noch tiefziehfähig.

US 2012/0175043 offenbart ein Verfahren zum Aufbringen mehrerer polymerer Beschichtungen auf einem Fasersubstrat, insbesondere ein Verfahren zum Aufbringen mehrerer polymerer Beschichtungen auf faserige Substrate, ohne Rücksicht auf chemische oder physikalische Unverträglichkeiten der polymeren Beschichtungsmaterialien.

WO 2013/160437 offenbart einen Verbund, umfassend ein (i) Kunststoffformteil oder (ii) ein Kunststoffhalbzeug mit einem Schutzschichtsystem, wobei das Schutzschichtsystem eine Kunststofffolie und eine plasmapolymere siliziumorganische Schicht umfasst. WO 2013/160437 betrifft ferner die Verwendung einer temporären Schutzfolie als Trennhilfe zur Form bzw. zwischen Form und entstehendem Kunststoffformteil in einem Kunststoffformgebungsprozess und ein Verfahren zum Herstellen eines Verbundes umfassend ein Kunststoffformteil und eine temporäre Schutzfolie.

US 2015/0266276 offenbart einen Verbund, umfassend (i) eine Kunststoffkomponente oder (ii) ein Kunststoffhalbzeug mit einem Schutzschichtsystem, wobei das Schutzschichtsystem eine Kunststofffolie und eine Organosilizium-Plasmapolymerschicht umfasst, wobei die Organosilizium-Plasmapolymerschicht zwischen der (i) Kunststoffkomponente oder dem (ii) Kunststoffhalbzeug und der Kunststofffolie angeordnet ist; und wobei nach dem Aushärten der (i) Kunststoffkomponente oder des (ii) Kunststoffhalbzeugs die siliziumorganische Plasmapolymerschicht besser an der Kunststofffolie haftet als an der (i) Kunststoffkomponente oder dem (ii) Kunststoffhalbzeug.

WO 2017/068152 offenbart ein Verbundbauteil (10), das durch folgenden Schichtenaufbau gekennzeichnet ist: a) eine Schicht (11), die zumindest teilweise aus Polyethylen besteht, b) eine Schicht (12), die zumindest teilweise aus einem Polyurethan und/oder Elastomer besteht, c) wenigstens eine Schicht (13), die zumindest teilweise aus einem mittels Fasern (14) verstärkten Kunststoff besteht, oder die zumindest teilweise aus einem Klebstoff besteht, wobei die Schicht (12) unmittelbar zwischen der Schicht (11) und der Schicht (13) angeordnet ist, wobei die Schichten (11) und (12) in einem ersten Arbeitsgang zu einem Laminatverbund gefügt wurden und die Schicht (13) in einem zweiten Arbeitsgang an den die Schichten (11) und (12) umfassenden Laminatverbund gefügt wurden.

DE 10 2007 010071 A1 betrifft einen Schichtverbund umfassend eine Lack- und eine Trennschicht sowie eine Lack-Träger-Anordnung zur Übertragung von Lack. Der Schichtverbund umfasst eine Lackschicht und eine Trennschicht, wobei (a) die Lackschicht aus einem nicht ausgehärteten und/oder teilweise ausgehärteten und/oder ausgehärteten Lack besteht und (b) die Trennschicht eine plasmapolymere Schicht ist, bestehend aus Kohlenstoff, Silicium, Sauerstoff und Wasserstoff sowie gegebenenfalls üblichen Verunreinigungen. WO 2021/094358 A1 offenbart eine Trägerfolie zur Beschichtung von Kunststoffformteilen mit einem Beschichtungsmaterial, wobei die Trägerfolie eine haftungsmodifizierte Schicht (2), die auf einer Mischung basiert, welche ein Polyolefin und ein thermoplastisches Elastomer umfasst, wobei der Gewichtsanteil des thermoplastischen Elastomers im Bereich von 1.0 Gew.-% bis 35 Gew.-%, bevorzugt 5.0 Gew.-% bis 15 Gew.-%, bezogen auf das Gesamtgewicht der haftungsmodifizierten Schicht liegt, sowie eine weitere Schicht (4), die auf Polypropylen-Homopolymer und Polypropylen-Copolymer basiert, wobei die Trägerfolie mit einem Beschichtungsmaterial (1) auf der haftungsmodifizierten Schicht ausgestattet wird und die Folie eine Gesamtdicke von 40 bis 250 µm aufweist. Zudem ist ein Verfahren offenbart, umfassend die Schritte:(a) Bereitstellen einer vorstehend beschriebenen Kunststofffolie; (b) Tiefziehen der Kunststofffolie, bevorzugt bei Raumtemperatur ggf. durch Anlegen eines Vakuums ; in einem Werkzeug zur Herstellung von Kunststoffformteilen;(c) Kontaktieren des Beschichtungsmaterials mit einer aushärtbaren Kunststoffzusammensetzung; und(d) Aushärten der Kunststoffzusammensetzung; wobei die Verbundhaftung des Beschichtungsmaterials an der ausgehärteten Zusammensetzung größer ist als die Verbundhaftung des Beschichtungsmaterials an der haftungsmodifizierten Schicht der Kunststofffolie, und die Trägerfolie vom beschichteten Kunststoffformteil getrennt wird, d.h. als Trennfolie fungiert, und wobei als Kunststoffzusammensetzung auch Faserverbunde genannt sind.

Es besteht ein Bedarf an Trennfolien, welche sich zur Herstellung von Faserverbundkunststoff-Bauteilen, insbesondere durch einen Vakuuminfusionsprozess eignen und welche Vorteile gegenüber dem Stand der Technik haben. Die Trennfolien sollten den Einsatz flüssiger Trennmittel bei der Herstellung von Faserverbundkunststoff-Bauteilen überflüssig machen. Ferner sollten die Trennfolien aus Trägerfolien herstellbar sein, welche durch Blasfoliencoextrusion erhältlich sind, und eine intrinsische Trennwirkung bieten. Außerdem sollten die Trennfolien tiefziehfähig sein und den im exothermen Aushärteprozess des Kunststoffharzes entstehenden Temperaturen standhalten können. Darüber hinaus sollten die Trennfolien für gewissen Zeit auf den Oberflächen der ausgehärteten Faserverbundkunststoff-Bauteilen verbleiben können, um als Schutzfolie zu wirken, jedoch zu gegebener Zeit ohne Schwierigkeiten davon ablösbar zu sein, um die Oberfläche der Faserverbundkunststoff-Bauteile freizulegen. Ferner sollten die Trennfolien auf der dem Faserverbundkunststoff-Bauteilen abgewandten Seite, d.h. der Außenseite, hinreichende Release-Eigenschaften gegenüber sog. *"Tacky-Tapes"* aufweisen, welche üblicherweise zum Verkleben von Bahnen von Trennfolien miteinander oder zum Fixieren von (Bagging) Folien an der Werkzeugform eingesetzt werden.

Diese Aufgabe wird durch den Gegenstand der Patentansprüche gelöst.

Es wurde überraschend gefunden, dass tiefziehfähige Trennfolien bereitgestellt werden können, welche nach dem Tiefziehen die Form für ein Faserverbundkunststoff-Bauteil wie eine Schutzhaut eins zu eins abbilden, so dass eine Beschädigung der Formoberfläche nicht mehr möglich ist.

Ferner wurde überraschend gefunden, dass Trennfolien hergestellt werden können, welche infolge einer vergleichsweise hohe Dehnfähigkeit das Tiefziehen der Trennfolie bei geringen Kräften unterstützen. Bei Einsatz der erfindungsgemäßen Trennfolie resultiert eine sehr ebenmäßige Oberfläche des gehärteten Faserverbundkunststoff-Bauteils. Die Notwendigkeit zur Nacharbeit der Oberfläche wird dadurch wesentlich verringert, im Idealfall komplett vermieden. Prozesskostenvorteile können durch die Einsparung von Material (Trennmittel, Füllmittel) und Arbeitszeit für das Aufbringen des Füllmittels und das Schleifen der Oberfläche erzielt werden. Zugleich ergeben sich Vorteile beim Gesundheitsschutz der Mitarbeiter, da die Handhabung des Trennmittels entfällt und die Mitarbeiter dem Feinstaub beim Schleifen der Oberfläche des gehärteten Faserverbundkunststoff-Bauteils nicht mehr ausgesetzt sind.

Außerdem wurde überraschend gefunden, dass tiefziehfähige Trennfolien bereitgestellt werden können, welche ohne Releasebeschichtung auf Basis von Silikonverbindungen auskommen und intrinsische Release-Eigenschaften gegenüber den eingesetzten Kunststoffharzen aufweisen, wobei die Release-Eigenschaften allein über die Zusammensetzung der Trennfolie erzielt werden.

Ein weiterer Vorteil der erfindungsgemäßen Trennfolie ergibt sich dadurch, dass diese für einen längeren Zeitraum, je nach Klimazone 3-6 Monaten, auch im Außenbereich auf der Oberfläche des gehärteten Faserverbundkunststoff-Bauteils verbleiben kann und so einen Schutz der Oberfläche gegen Umwelteinflüsse während der Lagerzeit bietet.

Darüber hinaus wurde überraschend gefunden, dass die erste Oberflächenschicht, welche der Form zugewandt ist und auf einem thermoplastischen Polyester-Elastomer basiert, ausreichende Release Eigenschaften gegenüber der Form aufweist. Dies ermöglicht es, dass die erfindungsgemäße Trennfolie beim Einbringen in die Form repositioniert werden kann. Die geringe Kraftaufnahme sowie die bereits bei niedrigen Dehnungen einsetzende plastische Verformung der erfindungsgemäßen Trennfolie bringen zusätzlich den Vorteil, dass die Trennfolie im tiefgezogenen Zustand keine horizontalen Zugkräfte auf das *"Tacky-Tape"* ausübt; Leckagen werden dadurch vermieden.

Weiterhin wurde überraschend gefunden, dass die Zeitdauer für die Nacharbeitung des Faserverbundkunststoff-Bauteils durch die Verwendung der erfindungsgemäßen Trennfolie wesentlich verkürzt werden kann. Hierdurch werden Kosten reduziert, welche üblicherweise durch die Nachbearbeitung des Faserverbundkunststoff-Bauteils entstehen (z. B. durch die zur Bearbeitung notwendigen Räumlichkeiten wie Hallen bzw. Hallenflächen, Unterhaltskosten für Geräte zur Bearbeitung der Oberfläche wie z.B. Schleifgeräte und Entsorgungskosten für Schleifabfälle wie z.B. Staub und Schleifpapier).

Ein erster Aspekt der Erfindung betrifft eine mehrschichtige Trennfolie umfassend
- eine erste Oberflächenschicht basierend auf einer Mischung von einem thermoplastischen Elastomer und einem Polyolefin, wobei in der ersten Oberflächenschicht der Gewichtsanteil des thermoplastischen Elastomers größer ist als der Gewichtsanteil des Polyolefins;
- eine Haftvermittlerschicht;
- ggf. eine erste Zwischenschicht;
- ggf. eine zweite Zwischenschicht; und
- eine zweite Oberflächenschicht basierend auf wenigstens einem Polypropylen oder Propylencopolymer;
wobei die Trennfolie eine Gesamtschichtdicke im Bereich von 10 bis 250 µm aufweist.

Die erste Oberflächenschicht sowie die zweite Oberflächenschicht flankieren die beiden äußeren Oberflächen der erfindungsgemäßen Trennfolie. Demnach stehen die erste Oberflächenschicht und die zweite Oberflächenschicht jeweils nur auf einer ihrer beiden Seiten mit einer weiteren Schicht der erfindungsgemäßen Trennfolie in unmittelbarem Kontakt; die jeweils gegenüberliegende Schicht bildet die äußere Oberfläche der erfindungsgemäßen Trennfolie.

Beim Einsatz der erfindungsgemäßen Trennfolie zur Herstellung eines Faserverbundkunststoff-Bauteils in einer Form ist die erste Oberflächenschicht dazu bestimmt, der Form zugewandt zu werden, wohingegen die zweite Oberflächenschicht mit dem härtbaren Kunststoffharz in Kontakt kommt und daran in ablösbarer Weise haftet. Im Verbund aus Trennfolie und Faserverbundkunststoff-Bauteil bildet die erste Oberflächenschicht der Trennfolie dann die Außenseite des Verbunds, die zweite Oberflächenschicht der Trennfolie die Innenseite des Verbunds.

Die erste Zwischenschicht sowie die zweite Zwischenschicht sind jeweils unabhängig voneinander optional.

In bevorzugten Ausführungsformen
(i) besteht die erfindungsgemäße Trennfolie aus der ersten Oberflächenschicht, der Haftvermittlerschicht und der zweiten Oberflächenschicht;
(ii) umfasst die erfindungsgemäße Trennfolie die erste Oberflächenschicht, die Haftvermittlerschicht, die erste Zwischenschicht und die zweite Oberflächenschicht oder besteht daraus; oder
(iii) umfasst die erfindungsgemäße Trennfolie die erste Oberflächenschicht, die Haftvermittlerschicht, die erste Zwischenschicht, die zweite Zwischenschicht und die zweite Oberflächenschicht oder besteht daraus;
bevorzugt jeweils in der vorstehend genannten Abfolge der Schichten.

Grundsätzlich können neben den vorstehend genannten Schichten ggf. beliebige weitere Schichten vorhanden sein. Die erfindungsgemäße Trennfolie weist somit mindestens drei Schichten auf, kann jedoch grundsätzlich auch vier, fünf, sechs, sieben oder mehr Schichten aufweisen, wobei ein fünfschichtiger Aufbau bevorzugt ist.

Sofern nicht ausdrücklich etwas anderes angegeben ist, sind Prozentangaben Gewichtsprozente. Sofern nicht ausdrücklich etwas anderes angegeben ist, sind Normen wie z.B. EN ISO, ASTM, FINAT etc. in der Fassung maßgeblich, welche am 1. Januar 2021 gültig war.

Sofern nicht ausdrücklich etwas anderes angegeben ist, bedeutet der Begriff "basierend auf", dass die genannte Komponente den gewichtsmäßigen Hauptbestandteil ausmacht, wobei die Komponente ihrerseits ein Gemisch mehrerer Inhaltsstoffe sein kann. Die Hauptkomponente muss dabei nicht zwangsläufig mehr als 50 Gew.-% ausmachen; es darf lediglich keine weitere Komponente vorliegen, deren Gewichtsanteil noch größer ist.

Die erste Oberflächenschicht der erfindungsgemäßen Trennfolie basiert auf einer Mischung von einem thermoplastischen Elastomer und einem Polyolefin.

Es wurde überraschend gefunden, dass die erfindungsgemäße Mischung von einem thermoplastischen Elastomer und einem Polyolefin besondere Vorteile hat, insbesondere wenn diese miteinander unverträglich sind. Diese ist z.B. dann der Fall, wenn das thermoplastische Elastomer ein thermoplastisches Polyesterelastomer ist und das Polyolefin ein Polyethylen, insbesondere LLDPE. Das Polyethylen agiert dann als Antiblockmittel im thermoplastischen Polyesterelastomer was eine für die Blasfoliencoextrusion vorteilhafte Oberflächenrauhigkeit erzeugt, welche mit gängigen Antiblockmitteln wie Talkum-Masterbatch nicht oder kaum erzielt werden kann. Dies verhindert eine Faltenbildung und ein Verkleben mit den Walzen beim Extrusionsprozess, was z.B. zu einer Verbesserung der Blasfoliencoextrusion führt.

Darüber hinaus wurde überraschend gefunden, dass die erste Oberflächenschicht gegenüber den mit Butylkleber beschichteten "Tacky-Tapes", welche zur Abdichtung der Form eingesetzt werden, eine ausreichende Trennwirkung entfaltet.

Thermoplastische Elastomere sind einem Fachmann bekannt und kommerziell erhältlich. Bei Raumtemperatur verhalten sie sich vergleichbar den herkömmlichen, d.h. nicht-thermoplastischen Elastomeren, lassen sich jedoch unter Wärmezufuhr plastisch verformen und zeigen somit ein thermoplastisches Verhalten. Erfindungsgemäß bevorzugte thermoplastische Elastomere sind ausgewählt aus der Gruppe bestehend aus thermoplastischen Polyamidelastomere; thermoplastischen Polyesterelastomeren (Copolyesterelastomeren); thermoplastischen Elastomeren auf Olefinbasis, z.B. Polypropylen/Ethylen-Propylen-Dien-Kautschuk (PP/EPDM); thermoplastischen Styrol-Blockcopolymeren (Styrol-Butadien-Styrol-Blockcopolymer (SBS), Styrol-Ethylen-Butylen-Styrol-Blockcopolymer (SEBS), Styrol-Ethylen-Propylen-Styrol-Blockcopolymer (SEPS), Styrol-Ethylen-Ethylen-Propylen-Styrol-Blockcopolymer (SEEPS) und Methylacrylat-Butadien-Styrol-Copolymer (MBS), Styrol-Isopren-Styrol-Blockcopolymer (SIS), Styrol-Isopren-Butylen-Copolymer (SIBS)); thermoplastischen Elastomeren auf Urethanbasis; und thermoplastischen Vulkanisaten oder vernetzten thermoplastischen Elastomeren auf Olefinbasis, z.B. PP/EPDM.

Bevorzugt ist das thermoplastische Elastomer ein thermoplastisches Polyesterelastomer. Thermoplastische Polyesterelastomere sind einem Fachmann bekannt und kommerziell erhältlich, beispielsweise unter den Handelsbezeichnungen Hytrel^{®} (Du Pont), Keyflex^{®} (LG Chem), und Skypel^{®} (SK Chemicals).

In besonders bevorzugten Ausführungsformen weist das thermoplastische Elastomer in der ersten Oberflächenschicht eine DSC Schmelztemperatur gemäß ISO 11357-3 auf
- von mindestens 150°C; bevorzugt mindestens 155°C, bevorzugter mindestens 160°C, noch bevorzugter mindestens 165°C; und/oder
- von höchstens 190°C; bevorzugt höchstens 185°C, bevorzugter höchstens 180°C, noch bevorzugter höchstens 175°C; und/oder
- im Bereich von 170±24°C; bevorzugt 170±16°C, bevorzugter 170±8°C.

Thermoplastische Elastomere, insbesondere thermoplastische Polyesterelastomere mit solchen Eigenschaften sind einem Fachmann bekannt und kommerziell erhältlich, beispielsweise als Hytrel^{®} G4078 NC010.

Polyolefine sind einem Fachmann bekannt und kommerziell erhältlich. Bevorzugt ist das Polyolefin ausgewählt aus der Gruppe bestehend aus Polyethylen (PE), Polypropylen (PP), Polymethylpenten (PMP), Polyisobutylen (PIB), Polybutylen (PB, Polybuten-1), deren Copolymerisaten und/oder Mischungen.

Bevorzugte Polyethylene umfassen Low-Density Polyethylen (LDPE / PE-LD), Linear-Low-Density Polyethylen (LLDPE / PE-LLD), High-Density Polyethylen (HDPE / PE-HD), wobei LLDPE besonders bevorzugt ist.

Bevorzugte Polypropylene umfassen ataktisches Polypropylen, isotaktisches Polypropylen, syndiotaktisches Polypropylen sowie heterophasisches Polypropylen. Bei heterophasischem Polypropylen handelts sich typischerweise um ein Copolymerisat aus Ethylen und Propylen, typischerweise polymerisiert unter Einsatz von Ziegler-Natta Katalysatoren.

Bevorzugt ist das Polyolefin in der ersten Oberflächenschicht ein Polyethylen oder ein Ethylencopolymer; bevorzugt ein LLDPE.

In besonders bevorzugten Ausführungsformen weist das Polyolefin in der ersten Oberflächenschicht einen Schmelzflussindex MFI 190°C, 2,16 kg gemäß ISO 1133 auf
- von mindestens 0,7 g/10 min; bevorzugt mindestens 0,8 g/10 min, bevorzugter mindestens 0,9 g/10 min, noch bevorzugter mindestens 1,0 g/10 min; und/oder
- von höchstens 1,5 g/10 min; bevorzugt höchstens 1,4 g/10 min, bevorzugter höchstens 1,3 g/10 min, noch bevorzugter höchstens 1,2 g/10 min; und/oder
- im Bereich von 1,1±0,3 g/10 min; bevorzugt 1,1±0,2 g/10 min, bevorzugter 1,1±0,1 g/10 min.

In besonders bevorzugten Ausführungsformen weist das Polyolefin in der ersten Oberflächenschicht eine VICAT Erweichungstemperatur gemäß ASTM D1525 auf
- von mindestens 96°C; bevorzugt mindestens 98°C, bevorzugter mindestens 100°C, noch bevorzugter mindestens 102°C; und/oder
- von höchstens 112°C; bevorzugt höchstens 110°C, bevorzugter höchstens 108°C, noch bevorzugter höchstens 106°C; und/oder
- im Bereich von 104±9°C; bevorzugt 104±6°C; bevorzugter 104±3°C.

In besonders bevorzugten Ausführungsformen weist das Polyolefin in der ersten Oberflächenschicht eine Dichte gemäß ASTM D792 auf
- von mindestens 0,900 g/cm³; bevorzugt mindestens 0,905 g/cm³, bevorzugter mindestens 0,910 g/cm³, noch bevorzugter mindestens 0,915 g/cm³; und/oder
- von höchstens 0,940 g/cm³; bevorzugt höchstens 0,935 g/cm³, bevorzugter höchstens 0,930 g/cm³, noch bevorzugter höchstens 0,925 g/cm³; und/oder
- im Bereich von 0,919±0,020 g/cm³; bevorzugt 0,919±0,015 g/cm³, bevorzugter 0,919±0,010 g/cm³, noch bevorzugter 0,919±0,005 g/cm³.

Polyolefine, insbesondere Polyethylene oder Ethylencopolymere wie LLDPE mit solchen Eigenschaften sind einem Fachmann bekannt und kommerziell erhältlich, beispielsweise als Dowlex^{®} NG 5056 G.

Erfindungsgemäß ist in der ersten Oberflächenschicht der Gewichtsanteil des thermoplastischen Elastomers größer als der Gewichtsanteil des Polyolefins.

Bevorzugt liegt der Gewichtsanteil des thermoplastischen Elastomers in der ersten Oberflächenschicht im Bereich von 72±25 Gew.-%, bezogen auf das Gesamtgewicht der ersten Oberflächenschicht; bevorzugt 72±20 Gew.-%, bevorzugter 72±15 Gew.-%, noch bevorzugter 72±10 Gew.-%, am bevorzugtesten 72±5 Gew.-%.

Bevorzugt liegt der Gewichtsanteil des Polyolefins in der ersten Oberflächenschicht im Bereich von 10±9 Gew.-%, bezogen auf das Gesamtgewicht der ersten Oberflächenschicht; bevorzugt 10±8 Gew.-%, bevorzugter 10±7 Gew.-%, noch bevorzugter 10±6 Gew.-%, am bevorzugtesten 10±5 Gew.- %.

Die Schichtdicke der ersten Oberflächenschicht
- beträgt bevorzugt mindestens 5 µm; bevorzugt mindestens 6 µm, bevorzugter mindestens 7 µm, noch bevorzugter mindestens 8 µm; und/oder
- beträgt bevorzugt höchstens 13 µm; bevorzugt höchstens 12 µm, bevorzugter höchstens 11 µm, noch bevorzugter höchstens 10 µm; und/oder
- liegt bevorzugt im Bereich von 9±7 µm; bevorzugt 9±5 µm, bevorzugter 9±3 µm.

Die zweite Oberflächenschicht der erfindungsgemäßen Trennfolie basiert auf wenigstens einem Polypropylen oder Propylencopolymer.

Bevorzugt umfasst das wenigstens eine Polypropylen oder Propylencopolymer in der zweiten Oberflächenschicht wenigstens ein heterophasisches Polypropylen.

Bevorzugt liegt der Gewichtsanteil des wenigstens einen Polypropylens oder Propylencopolymers in der zweiten Oberflächenschicht im Bereich von 88±12 Gew.-%, bezogen auf das Gesamtgewicht der zweiten Oberflächenschicht; bevorzugt 88±10 Gew.-%, bevorzugter 88±8 Gew.-%, noch bevorzugter 88±6 Gew.-%, am bevorzugtesten 88±4 Gew.-%.

In besonders bevorzugten Ausführungsformen ist das wenigstens eine Polypropylen oder Propylencopolymer in der zweiten Oberflächenschicht eine Mischung von einem ersten heterophasischen Polypropylen und einem davon verschiedenen zweiten heterophasischen Polypropylen.

Es wurde überraschend gefunden, dass die Extrusionsblase bei der Blasfoliencoextrusion stabilisiert werden kann, wenn eine Mischung von zwei unterschiedlichen heterophasischen Polypropylenen eingesetzt wird.

Bevorzugt beträgt der Gewichtsanteil des ersten heterophasischen Polypropylens in der zweiten Oberflächenschicht höchstens 60 Gew.-%, bezogen auf das Gesamtgewicht der zweiten Oberflächenschicht; bevorzugt höchstens 50 Gew.-%, bevorzugter höchstens 40 Gew.-%, noch bevorzugter höchstens 30 Gew.-%.

Bevorzugt liegt der Gewichtsanteil des ersten heterophasischen Polypropylens in der zweiten Oberflächenschicht im Bereich von 20±12 Gew.-%, bezogen auf das Gesamtgewicht der zweiten Oberflächenschicht; bevorzugt 20±10 Gew.-%, bevorzugter 20±8 Gew.-%, noch bevorzugter 20±6 Gew.-%, am bevorzugtesten 20±4 Gew.-%.

Bevorzugt weist das erste heterophasische Polypropylen eine niedrigere Schmelzflussrate und/oder eine niedrigere DSC Schmelztemperatur auf als das zweite heterophasische Polypropylen.

In besonders bevorzugten Ausführungsformen weist das erste heterophasische Polypropylen eine Schmelzflussrate MFR 230°C, 2,16 kg gemäß ISO 1133-1 auf
- von mindestens 0,2 g/10 min; bevorzugt mindestens 0,3 g/10 min, bevorzugter mindestens 0,4 g/10 min, noch bevorzugter mindestens 0,5 g/10 min; und/oder
- von höchstens 1,0 g/10 min; bevorzugt höchstens 0,9 g/10 min, bevorzugter höchstens 0,8 g/10 min, noch bevorzugter höchstens 0,7 g/10 min; und/oder
- im Bereich von 0,6±0,3 g/10 min; bevorzugt 0,6±0,2 g/10 min, bevorzugter 0,6±0,1 g/10 min;

In besonders bevorzugten Ausführungsformen weist das erste heterophasische Polypropylen eine DSC Schmelztemperatur gemäß ISO 11357-3 auf
- von mindestens 125°C; bevorzugt mindestens 130°C, bevorzugter mindestens 135°C, noch bevorzugter mindestens 140°C; und/oder
- von höchstens 165°C; bevorzugt höchstens 155°C, bevorzugter höchstens 150°C, noch bevorzugter höchstens 145°C; und/oder
- im Bereich von 142±24°C; bevorzugt 142±16°C, bevorzugter 142±8°C.

Heterophasische Polypropylene mit solchen Eigenschaften sind einem Fachmann bekannt und kommerziell erhältlich, beispielsweise als Adflex^{®} Q 100 F.

Bevorzugt beträgt der Gewichtsanteil des zweiten heterophasischen Polypropylens in der zweiten Oberflächenschicht mindestens 30 Gew.-%, bezogen auf das Gesamtgewicht der zweiten Oberflächenschicht; bevorzugt mindestens 40 Gew.-%, bevorzugter mindestens 50 Gew.-%, noch bevorzugter mindestens 60 Gew.-%.

Bevorzugt liegt der Gewichtsanteil des zweiten heterophasischen Polypropylens in der zweiten Oberflächenschicht im Bereich von 68±12 Gew.-%, bezogen auf das Gesamtgewicht der zweiten Oberflächenschicht; bevorzugt 68±10 Gew.-%, bevorzugter 68±8 Gew.-%, noch bevorzugter 68±6 Gew.-%, am bevorzugtesten 68±4 Gew.-%.

In besonders bevorzugten Ausführungsformen weist das zweite heterophasische Polypropylen eine Schmelzflussrate MFR 230°C, 2,16 kg gemäß ISO 1133-1 auf
- von mindestens 0,5 g/10 min; bevorzugt mindestens 0,6 g/10 min, bevorzugter mindestens 0,7 g/10 min, noch bevorzugter mindestens 0,8 g/10 min; und/oder
- von höchstens 1,2 g/10 min; bevorzugt höchstens 1,1 g/10 min, bevorzugter höchstens 1,0 g/10 min, noch bevorzugter höchstens 0,9 g/10 min; und/oder
- im Bereich von 0,85±0,3 g/10 min; bevorzugt 0,85±0,2 g/10 min, bevorzugter 0,85±0,1 g/10 min.

In besonders bevorzugten Ausführungsformen weist das zweite heterophasische Polypropylen eine DSC Schmelztemperatur gemäß ISO 11357-3 auf
- von mindestens 150°C; bevorzugt mindestens 155°C, bevorzugter mindestens 160°C, noch bevorzugter mindestens 165°C; und/oder
- von höchstens 185°C; bevorzugt höchstens 180°C, bevorzugter höchstens 175°C, noch bevorzugter höchstens 170°C; und/oder
- im Bereich von 166±24°C; bevorzugt 166±16°C, bevorzugter 166±8°C.

Heterophasische Polypropylene mit solchen Eigenschaften sind einem Fachmann bekannt und kommerziell erhältlich, beispielsweise als Borealis^{®} BA110CF.

Bevorzugt ist die Schichtdicke der zweiten Oberflächenschicht größer als die Schichtdicke der ersten Oberflächenschicht.

Die Schichtdicke der zweiten Oberflächenschicht
- beträgt bevorzugt mindestens 6 µm; bevorzugt mindestens 8 µm, bevorzugter mindestens 10 µm, noch bevorzugter mindestens 12 µm; und/oder
- beträgt bevorzugt höchstens 22 µm; bevorzugt höchstens 20 µm, bevorzugter höchstens 18 µm, noch bevorzugter höchstens 16 µm; und/oder
- liegt bevorzugt im Bereich von 14±12 µm; bevorzugt 14±9 µm, bevorzugter 14±6 µm.

Die erfindungsgemäße Trennfolie umfasst eine Haftvermittlerschicht. Dazu basiert die Haftvermittlerschicht typischerweise auf einem Material, welches jeweils mit den Materialien kompatibel ist, auf denen die beiden unmittelbar an die Haftvermittlerschicht angrenzenden Schichten basieren. Geeignete Materialien sind einem Fachmann bekannt und kommerziell erhältlich.

Bevorzugt sind diesen beiden unmittelbar an die Haftvermittlerschicht angrenzenden Schichten die erste Oberflächenschicht und entweder die erste Zwischenschicht oder die zweite Oberflächenschicht.

Demzufolge ist die Haftvermittlerschicht bevorzugt zwischen der ersten Oberflächenschicht und der ersten Zwischenschicht angeordnet. Bevorzugt grenzt die Haftvermittlerschicht direkt an die erste Oberflächenschicht an. Bevorzugt grenzt die Haftvermittlerschicht (mit ihrer gegenüberliegenden Seite) direkt an die erste Zwischenschicht an.

Bevorzugt basiert die Haftvermittlerschicht auf einem Ethylen-Acrylat Copolymer. Ethylen-Acrylat Copolymere, welche sich zur Herstellung solcher Haftvermittlerschichten eignen, sind einem Fachmann bekannt und kommerziell erhältlich.

Es wurde überraschend gefunden, dass Ethylen-Acrylat Copolymere eine gute Haftvermittlerwirkung entfalten, wohingegen herkömmliche Haftvermittler, z.B. auf Basis von Polyethylen, Polypropylen oder Elastomeren, welche mit Maleinsäureanhydrid gepfropft sind, keine ausreichende Haftvermittlerwirkung zeigen.

Die Haftvermittlerschicht ist bevorzugt nicht reaktiv, d.h. sie unterscheidet sich von herkömmlichen Reaktivklebstoffen und anderen herkömmlichen Haftvermittlern. Dadurch wird gewährleistet, dass die erfindungsgemäße Trennfolie thermoverformt, insbesondere tiefgezogen, oder kaltverformt werden kann. Bevorzugt basiert die Haftvermittlerschicht im Wesentlichen ausschließlich auf thermoplastischen Polymeren.

Die erfindungsgemäße Trennfolie weist vorzugsweise eine so hohe Verbundhaftung auf, dass die Schichten unter den für die Bestimmung der Verbundhaftung angegebenen üblichen Messbedingungen nicht zu trennen sind, eine Delaminierung unter Stressbedingungen also verhindert wird. Dies wird u.a. durch die Haftvermittlerschicht gewährleistet.

In besonders bevorzugten Ausführungsformen weist das Ethylen-Acrylat Copolymer einen Schmelzflussindex MFI 190°C, 2,16 kg gemäß ISO 1133 auf
- von mindestens 1,6 g/10 min; bevorzugt mindestens 1,7 g/10 min, bevorzugter mindestens 1,8 g/10 min, noch bevorzugter mindestens 1,9 g/10 min; und/oder
- von höchstens 2,4 g/10 min; bevorzugt höchstens 2,3 g/10 min, bevorzugter höchstens 2,2 g/10 min, noch bevorzugter höchstens 2,1 g/10 min; und/oder
- im Bereich von 2,0±0,3 g/10 min; bevorzugt 2,0±0,2 g/10 min, bevorzugter 2,0±0,1 g/10 min;

In besonders bevorzugten Ausführungsformen weist das Ethylen-Acrylat Copolymer eine DSC Schmelztemperatur gemäß ISO 11357-3 auf
- von mindestens 75°C; bevorzugt mindestens 80°C, bevorzugter mindestens 85°C, noch bevorzugter mindestens 90°C; und/oder
- von höchstens 110°C; bevorzugt höchstens 105°C, bevorzugter höchstens 100°C, noch bevorzugter höchstens 95°C; und/oder
- im Bereich von 91+12°C; bevorzugt 91±8°C, bevorzugter 91±4°C;

In besonders bevorzugten Ausführungsformen weist das Ethylen-Acrylat Copolymer eine VICAT Erweichungstemperatur gemäß ASTM D1525 auf
- von mindestens 40°C; bevorzugt mindestens 42°C, bevorzugter mindestens 44°C, noch bevorzugter mindestens 46°C; und/oder
- von höchstens 65°C; bevorzugt höchstens 60°C, bevorzugter höchstens 55°C, noch bevorzugter höchstens 50°C; und/oder
- im Bereich von 48±12°C; bevorzugt 48±8°C, bevorzugter 48±4°C.

Ethylen-Acrylat Copolymere mit solchen Eigenschaften sind einem Fachmann bekannt und kommerziell erhältlich, beispielsweise als Bynel^{®} 22E 780.

Bevorzugt beträgt der Gewichtsanteil des Ethylen-Acrylat Copolymers in der Haftvermittlerschicht mindestens 75 Gew.-%, bezogen auf das Gesamtgewicht der Haftvermittlerschicht; bevorzugt mindestens 80 Gew.-%, bevorzugter mindestens 85 Gew.-%, noch bevorzugter mindestens 90 Gew.-%, am bevorzugtesten mindestens 95 Gew.-%.

Die Schichtdicke der Haftvermittlerschicht
- beträgt bevorzugt mindestens 0,5 µm; bevorzugt mindestens 1,0 µm, bevorzugter mindestens 1,5 µm, noch bevorzugter mindestens 2,0 µm; und/oder
- beträgt bevorzugt höchstens 7 µm; bevorzugt höchstens 6 µm, bevorzugter höchstens 5 µm, noch bevorzugter höchstens 4 µm; und/oder
- liegt bevorzugt im Bereich von 3±2 µm; bevorzugt 3±1 µm.

Die erfindungsgemäße Trennfolie weist bevorzugt neben der ersten Oberflächenschicht und der zweiten Oberflächenschicht sowie der Haftvermittlerschicht eine erste Zwischenschicht auf.

Sofern die erfindungsgemäße Trennfolie zusätzlich auch eine zweite Zwischenschicht aufweist, weist die erste Zwischenschicht bevorzugt eine größere Schichtdicke auf als die zweite Zwischenschicht.

Es wurde überraschend gefunden, dass die erste Zwischenschicht, ggf. im Zusammenwirken mit der zweiten Zwischenschicht die Eigenschaften der erfindungsgemäßen Trennfolie verbessert. Dabei wurde überraschend gefunden, dass vergleichsweise weiche, tiefziehfähige Zwischenschichten mit einer Temperaturbeständigkeit >140°C vorteilhaft sind, da beim exothermen Aushärten des Kunststoffharzes, z.B. Epoxidharzes, Temperaturspitzen bis 135°C erreicht werden können.

In bevorzugten Ausführungsformen ist die erste Zwischenschicht zwischen der Haftvermittlerschicht und der zweiten Zwischenschicht angeordnet. In bevorzugten Ausführungsformen grenzt die erste Zwischenschicht direkt an die Haftvermittlerschicht an. In bevorzugten Ausführungsformen grenzt die erste Zwischenschicht (auf ihrer gegenüberliegenden Seite) direkt an die zweite Zwischenschicht an.

Die Schichtdicke der ersten Zwischenschicht
- beträgt bevorzugt mindestens 5 µm; bevorzugt mindestens 6 µm, bevorzugter mindestens 7 µm, noch bevorzugter mindestens 8 µm; und/oder
- beträgt bevorzugt höchstens 16 µm; bevorzugt höchstens 14 µm, bevorzugter höchstens 12 µm, noch bevorzugter höchstens 10 µm; und/oder
- liegt bevorzugt im Bereich von 9±8 µm; bevorzugt 9±6 µm, bevorzugter 9±4 µm.

Bevorzugt basiert die erste Zwischenschicht auf wenigstens einem Polypropylen oder Propylencopolymer, bevorzugt auf wenigstens einem heterophasischen Polypropylen.

In besonders bevorzugten Ausführungsformen basiert die erste Zwischenschicht auf einer Mischung von einem dritten heterophasischen Polypropylen und einem davon verschiedenen vierten heterophasischen Polypropylen.

In bevorzugten Ausführungsformen weist in der ersten Zwischenschicht das dritte heterophasische Polypropylen eine niedrigere Schmelzflussrate und/oder eine höhere DSC Schmelztemperatur auf als das vierte heterophasische Polypropylen.

Bevorzugt liegt der Gewichtsanteil des dritten heterophasischen Polypropylens in der ersten Zwischenschicht im Bereich von 0 bis 83,5 Gew.-%, bezogen auf das Gesamtgewicht der ersten Zwischenschicht. Bevorzugt liegt der Gewichtsanteil des dritten heterophasischen Polypropylens in der ersten Zwischenschicht im Bereich von 34±12 Gew.-%, bezogen auf das Gesamtgewicht der ersten Zwischenschicht; bevorzugt 34±10 Gew.-%, bevorzugter 34±8 Gew.-%, noch bevorzugter 34±6 Gew.-%, am bevorzugtesten 34±4 Gew.-%.

In einer weiteren bevorzugten Ausführungsform liegt der Gewichtsanteil des dritten heterophasischen Polypropylens in der ersten Zwischenschicht im Bereich von 58±12 Gew.-%, bezogen auf das Gesamtgewicht der ersten Zwischenschicht; bevorzugt 58±10 Gew.-%, bevorzugter 58±8 Gew.-%, noch bevorzugter 58±6 Gew.-%, am bevorzugtesten 58±4 Gew.-%.

In einer weiteren bevorzugten Ausführungsform liegt der Gewichtsanteil des dritten heterophasischen Polypropylens in der ersten Zwischenschicht, bezogen auf das Gesamtgewicht der ersten Zwischenschicht, bei
- mindestens 35 Gew.-%, bevorzugt mindestens 40 Gew.-%, bevorzugter mindestens 45 Gew.-%, noch bevorzugter mindestens 50 Gew.-%, am bevorzugtesten mindestens 55 Gew.-%.; und/oder
- höchstens 55 Gew.-%, bevorzugt höchstens 50 Gew.-%, bevorzugter höchstens 45 Gew.-%, noch bevorzugter höchstens 40 Gew.-%, am bevorzugtesten höchstens 35 Gew.-%.

Bevorzugt liegt der Gewichtsanteil des vierten heterophasischen Polypropylens in der ersten Zwischenschicht im Bereich von 0 bis 83,5 Gew.-%, bezogen auf das Gesamtgewicht der ersten Zwischenschicht. Bevorzugt liegt der Gewichtsanteil des vierten heterophasischen Polypropylens in der ersten Zwischenschicht im Bereich von 48±12 Gew.-%, bezogen auf das Gesamtgewicht der ersten Zwischenschicht; bevorzugt 48±10 Gew.-%, bevorzugter 48±8 Gew.-%, noch bevorzugter 48±6 Gew.-%, am bevorzugtesten 48±4 Gew.-%.

In einer weiteren bevorzugten Ausführungsform liegt der Gewichtsanteil des vierten heterophasischen Polypropylens in der ersten Zwischenschicht im Bereich von 40±6 Gew.-%, bezogen auf das Gesamtgewicht der ersten Zwischenschicht; bevorzugt 40±4 Gew.-%, bevorzugter 40±2 Gew.-%.

In einer weiteren bevorzugten Ausführungsform liegt der Gewichtsanteil des vierten heterophasischen Polypropylens in der ersten Zwischenschicht, bezogen auf das Gesamtgewicht der ersten Zwischenschicht, bei
- mindestens 40 Gew.-%, bevorzugt mindestens 45 Gew.-%; und/oder
- höchstens 50 Gew.-%, bevorzugt höchstens 45 Gew.-%, bevorzugter höchstens 40 Gew.-%.

Die erfindungsgemäße Trennfolie weist bevorzugt neben der ersten Oberflächenschicht, der zweiten Oberflächenschicht, der Haftvermittlerschicht sowie der ggf. vorhandenen ersten Zwischenschicht eine zweite Zwischenschicht auf.

In bevorzugten Ausführungsformen ist die zweite Zwischenschicht zwischen der ersten Zwischenschicht und der zweiten Oberflächenschicht angeordnet. In bevorzugten Ausführungsformen grenzt die zweite Zwischenschicht direkt an die erste Zwischenschicht an. In bevorzugten Ausführungsformen grenzt die zweite Zwischenschicht (auf ihrer gegenüberliegenden Seite) direkt an die zweite Oberflächenschicht an.

Die Schichtdicke der zweiten Zwischenschicht
- beträgt bevorzugt mindestens 1 µm; bevorzugt mindestens 2 µm, bevorzugter mindestens 3 µm, noch bevorzugter mindestens 4 µm; und/oder
- beträgt bevorzugt höchstens 9 µm; bevorzugt höchstens 8 µm, bevorzugter höchstens 7 µm, noch bevorzugter höchstens 6 µm; und/oder
- liegt bevorzugt im Bereich von 5±4 µm; bevorzugt 5±3 µm, bevorzugter 5±2 µm.

Bevorzugt basiert die zweite Zwischenschicht auf wenigstens einem Polypropylen oder Propylencopolymer; bevorzugt auf wenigstens einem heterophasischen Polypropylen.

In besonders bevorzugten Ausführungsformen basiert die zweite Zwischenschicht auf einer Mischung von einem fünften heterophasischen Polypropylen und einem davon verschiedenen sechsten heterophasischen Polypropylen.

In bevorzugten Ausführungsformen weist in der zweiten Zwischenschicht das fünfte heterophasische Polypropylen eine niedrigere Schmelzflussrate und/oder eine höhere DSC Schmelztemperatur auf als das sechste heterophasische Polypropylen.

Bevorzugt liegt der Gewichtsanteil des fünften heterophasischen Polypropylens in der zweiten Zwischenschicht im Bereich von 0 bis 83,5 Gew.-%, bezogen auf das Gesamtgewicht der zweiten Zwischenschicht. Bevorzugt liegt der Gewichtsanteil des fünften heterophasischen Polypropylens in der zweiten Zwischenschicht im Bereich von 34±12 Gew.-%, bezogen auf das Gesamtgewicht der zweiten Zwischenschicht; bevorzugt 34±10 Gew.-%, bevorzugter 34±8 Gew.-%, noch bevorzugter 34±6 Gew.- %, am bevorzugtesten 34±4 Gew.-%.

In einer weiteren bevorzugten Ausführungsform liegt der Gewichtsanteil des fünften heterophasischen Polypropylens in der zweiten Zwischenschicht im Bereich von 56±12 Gew.-%, bezogen auf das Gesamtgewicht der zweiten Zwischenschicht; bevorzugt 56±10 Gew.-%, bevorzugter 56±8 Gew.-%, noch bevorzugter 56±6 Gew.-%, am bevorzugtesten 56±4 Gew.-%.

In einer weiteren bevorzugten Ausführungsform liegt der Gewichtsanteil des fünften heterophasischen Polypropylens in der zweiten Zwischenschicht, bezogen auf das Gesamtgewicht der zweiten Zwischenschicht, bei
- mindestens 35 Gew.-%, bevorzugt mindestens 40 Gew.-%, bevorzugter mindestens 45 Gew.-%, noch bevorzugter mindestens 50 Gew.-%, am bevorzugtesten mindestens 55 Gew.-%.; und/oder
- höchstens 55 Gew.-%, bevorzugt höchstens 50 Gew.-%, bevorzugter höchstens 45 Gew.-%, noch bevorzugter höchstens 40 Gew.-%, am bevorzugtesten höchstens 35 Gew.-%.

Bevorzugt liegt der Gewichtsanteil des sechsten heterophasischen Polypropylens in der zweiten Zwischenschicht im Bereich von 0 bis 83,5 Gew.-%, bezogen auf das Gesamtgewicht der zweiten Zwischenschicht. Bevorzugt liegt der Gewichtsanteil des sechsten heterophasischen Polypropylens in der zweiten Zwischenschicht im Bereich von 50±12 Gew.-%, bezogen auf das Gesamtgewicht der zweiten Zwischenschicht; bevorzugt 50±10 Gew.-%, bevorzugter 50±8 Gew.-%, noch bevorzugter 50±6 Gew.- %, am bevorzugtesten 50±4 Gew.-%.

In einer weiteren bevorzugten Ausführungsform liegt der Gewichtsanteil des sechsten heterophasischen Polypropylens in der zweiten Zwischenschicht im Bereich von 40±8 Gew.-%, bezogen auf das Gesamtgewicht der zweiten Zwischenschicht; bevorzugt 40±6 Gew.-%, bevorzugter 40±4 Gew.-%, noch bevorzugter 40±2 Gew.-%.

In einer weiteren bevorzugten Ausführungsform liegt der Gewichtsanteil des vierten heterophasischen Polypropylens in der ersten Zwischenschicht, bezogen auf das Gesamtgewicht der ersten Zwischenschicht, bei
- mindestens 40 Gew.-%, bevorzugt mindestens 45 Gew.-%, bevorzugter mindestens 50 Gew.-%; und/oder
- höchstens 50 Gew.-%, bevorzugt höchstens 45 Gew.-%, bevorzugter höchstens 40 Gew.-%.

In einer weiteren bevorzugten Ausführungsform weist die erfindungsgemäße Trennfolie neben der ersten Oberflächenschicht und der zweiten Oberflächenschicht sowie der Haftvermittlerschicht eine erste Zwischenschicht und eine zweite Zwischenschicht auf, wobei
- die erste Zwischenschicht auf einer Mischung von einem dritten heterophasischen Polypropylen und einem davon verschiedenen vierten heterophasischen Polypropylen basiert;
- die zweite Zwischenschicht auf einer Mischung von einem fünften heterophasischen Polypropylen und einem davon verschiedenen sechsten heterophasischen Polypropylen basiert;
- der Gewichtsanteil des dritten heterophasischen Polypropylens in der ersten Zwischenschicht im Bereich von 34±12 Gew.-% liegt, bezogen auf das Gesamtgewicht der ersten Zwischenschicht; bevorzugt 34±10 Gew.-%, bevorzugter 34±8 Gew.-%, noch bevorzugter 34±6 Gew.-%, am bevorzugtesten 34±4 Gew.-%;
- der Gewichtsanteil des vierten heterophasischen Polypropylens in der ersten Zwischenschicht im Bereich von 48±6 Gew.-% liegt, bezogen auf das Gesamtgewicht der ersten Zwischenschicht; bevorzugt 48±4 Gew.-%, bevorzugter 48±2 Gew.-%;
- der Gewichtsanteil des fünften heterophasischen Polypropylens in der zweiten Zwischenschicht im Bereich von 34±12 Gew.-% liegt, bezogen auf das Gesamtgewicht der zweiten Zwischenschicht; bevorzugt 34±10 Gew.-%, bevorzugter 34±8 Gew.-%, noch bevorzugter 34±6 Gew.-%, am bevorzugtesten 34±4 Gew.-%;
- der Gewichtsanteil des sechsten heterophasischen Polypropylens in der zweiten Zwischenschicht im Bereich von 50±8 Gew.-% liegt, bezogen auf das Gesamtgewicht der zweiten Zwischenschicht; bevorzugt 50±6 Gew.-%, bevorzugter 50±4 Gew.-%, noch bevorzugter 50±2 Gew.-%.

In einer weiteren bevorzugten Ausführungsform weist die erfindungsgemäße Trennfolie neben der ersten Oberflächenschicht und der zweiten Oberflächenschicht sowie der Haftvermittlerschicht eine erste Zwischenschicht und eine zweite Zwischenschicht auf, wobei
- die erste Zwischenschicht auf einer Mischung von einem dritten heterophasischen Polypropylen und einem davon verschiedenen vierten heterophasischen Polypropylen basiert;
- die zweite Zwischenschicht auf einer Mischung von einem fünften heterophasischen Polypropylen und einem davon verschiedenen sechsten heterophasischen Polypropylen basiert;
- der Gewichtsanteil des dritten heterophasischen Polypropylens in der ersten Zwischenschicht im Bereich von 58±12 Gew.-% liegt, bezogen auf das Gesamtgewicht der ersten Zwischenschicht; bevorzugt 58±10 Gew.-%, bevorzugter 58±8 Gew.-%, noch bevorzugter 58±6 Gew.-%, am bevorzugtesten 58±4 Gew.-%;
- der Gewichtsanteil des vierten heterophasischen Polypropylens in der ersten Zwischenschicht im Bereich von 40±6 Gew.-% liegt, bezogen auf das Gesamtgewicht der ersten Zwischenschicht; bevorzugt 40±4 Gew.-%, bevorzugter 40±2 Gew.-%;
- der Gewichtsanteil des fünften heterophasischen Polypropylens in der zweiten Zwischenschicht im Bereich von 56±12 Gew.-% liegt, bezogen auf das Gesamtgewicht der zweiten Zwischenschicht; bevorzugt 56±10 Gew.-%, bevorzugter 56±8 Gew.-%, noch bevorzugter 56±6 Gew.-%, am bevorzugtesten 56±4 Gew.-%;
- der Gewichtsanteil des sechsten heterophasischen Polypropylens in der zweiten Zwischenschicht im Bereich von 40±8 Gew.-% liegt, bezogen auf das Gesamtgewicht der zweiten Zwischenschicht; bevorzugt 40±6 Gew.-%, bevorzugter 40±4 Gew.-%, noch bevorzugter 40±2 Gew.-%.

In bevorzugten Ausführungsformen weist das dritte heterophasische Polypropylen in der ersten Zwischenschicht und/oder das fünfte heterophasische Polypropylen in der zweiten Zwischenschicht jeweils unabhängig voneinander eine Schmelzflussrate MFR 230°C, 2,16 kg gemäß ISO 1133-1 auf
- von mindestens 0,2 g/10 min; bevorzugt mindestens 0,3 g/10 min, bevorzugter mindestens 0,4 g/10 min, noch bevorzugter mindestens 0,5 g/10 min; und/oder
- von höchstens 1,0 g/10 min; bevorzugt höchstens 0,9 g/10 min, bevorzugter höchstens 0,8 g/10 min, noch bevorzugter höchstens 0,7 g/10 min; und/oder
- im Bereich von 0,6±0,3 g/10 min; bevorzugt 0,6±0,2 g/10 min, bevorzugter 0,6±0,1 g/10 min;

In bevorzugten Ausführungsformen weist das dritte heterophasische Polypropylen in der ersten Zwischenschicht und/oder das fünfte heterophasische Polypropylen in der zweiten Zwischenschicht jeweils unabhängig voneinander eine DSC Schmelztemperatur gemäß ISO 11357-3 auf
- von mindestens 125°C; bevorzugt mindestens 130°C, bevorzugter mindestens 135°C, noch bevorzugter mindestens 140°C; und/oder
- von höchstens 165°C; bevorzugt höchstens 155°C, bevorzugter höchstens 150°C, noch bevorzugter höchstens 145°C; und/oder
- im Bereich von 142±24°C; bevorzugt 142±16°C, bevorzugter 142±8°C.

Heterophasische Polypropylene mit solchen Eigenschaften sind einem Fachmann bekannt und kommerziell erhältlich, beispielsweise als Adflex^{®} Q 100 F.

In bevorzugten Ausführungsformen weist das vierte heterophasische Polypropylen in der ersten Zwischenschicht und/oder das sechste heterophasische Polypropylen in der zweiten Zwischenschicht jeweils unabhängig voneinander eine Schmelzflussrate MFR 230°C, 2,16 kg gemäß ISO 1133-1 auf
- von mindestens 0,4 g/10 min; bevorzugt mindestens 0,5 g/10 min, bevorzugter mindestens 0,6 g/10 min, noch bevorzugter mindestens 0,7 g/10 min; und/oder
- von höchstens 1,3 g/10 min; bevorzugt höchstens 1,2 g/10 min, bevorzugter höchstens 1,1 g/1,0 min, noch bevorzugter höchstens 0,9 g/10 min; und/oder
- im Bereich von 0,8±0,3 g/10 min; bevorzugt 0,8±0,2 g/10 min, bevorzugter 0,8±0,1 g/10 min;

In bevorzugten Ausführungsformen weist das vierte heterophasische Polypropylen in der ersten Zwischenschicht und/oder das sechste heterophasische Polypropylen in der zweiten Zwischenschicht jeweils unabhängig voneinander eine DSC Schmelztemperatur gemäß ISO 11357-3 auf
- von mindestens 120°C; bevorzugt mindestens 125°C, bevorzugter mindestens 130°C, noch bevorzugter mindestens 135°C; und/oder
- von höchstens 165°C; bevorzugt höchstens 155°C, bevorzugter höchstens 150°C, noch bevorzugter höchstens 145°C; und/oder
- im Bereich von 140±24°C; bevorzugt 140±16°C, bevorzugter 140±8°C.

Heterophasische Polypropylene mit solchen Eigenschaften sind einem Fachmann bekannt und kommerziell erhältlich, beispielsweise als Borsoft^{®} SA 233 CF.

In bevorzugten Ausführungsformen der erfindungsgemäßen Trennfolie sind
(i) das erste heterophasische Polypropylen in der zweiten Oberflächenschicht und das dritte heterophasische Polypropylen in der ersten Zwischenschicht gleich; und/oder
(ii) das erste heterophasische Polypropylen in der zweiten Oberflächenschicht und das fünfte heterophasische Polypropylen in der zweiten Zwischenschicht gleich; und/oder
(iii) das dritte heterophasische Polypropylen in der ersten Zwischenschicht und das fünfte heterophasische Polypropylen in der zweiten Zwischenschicht gleich; und/oder
(iv) das vierte heterophasische Polypropylen in der ersten Zwischenschicht und das sechste heterophasische Polypropylen in der zweiten Zwischenschicht gleich.

In bevorzugten Ausführungsformen der erfindungsgemäßen Trennfolie sind
(i) das erste heterophasische Polypropylen in der zweiten Oberflächenschicht und das vierte heterophasische Polypropylen in der ersten Zwischenschicht verschieden; und/oder
(ii) das erste heterophasische Polypropylen in der zweiten Oberflächenschicht und das sechste heterophasische Polypropylen in der zweiten Zwischenschicht verschieden; und/oder
(iii) das zweite heterophasische Polypropylen in der zweiten Oberflächenschicht und das dritte heterophasische Polypropylen in der ersten Zwischenschicht verschieden; und/oder
(iv) das zweite heterophasische Polypropylen in der zweiten Oberflächenschicht und das vierte heterophasische Polypropylen in der ersten Zwischenschicht verschieden; und/oder
(v) das zweite heterophasische Polypropylen in der zweiten Oberflächenschicht und das fünfte heterophasische Polypropylen in der zweiten Zwischenschicht verschieden; und/oder
(vi) das zweite heterophasische Polypropylen in der zweiten Oberflächenschicht und das sechste heterophasische Polypropylen in der zweiten Zwischenschicht verschieden; und/oder
(vii) das dritte heterophasische Polypropylen in der ersten Zwischenschicht und das sechste heterophasische Polypropylen in der zweiten Zwischenschicht verschieden; und/oder
(viii) das vierte heterophasische Polypropylen in der ersten Zwischenschicht und das fünfte heterophasische Polypropylen in der zweiten Zwischenschicht verschieden.

Jede Schicht der erfindungsgemäßen Trennfolie kann unabhängig voneinander Zusatzmittel enthalten, die herkömmlicherweise in derartigen Folien verwendet werden. Beispiele derartiger Zusatzmittel sind Pigmente, Farbstoffe, Gleitmittel, Antistatika, Füllstoffe, Keimbildner, Weichmacher, Schmiermittel, Stabilisatoren, UV Absorber, etc., welche erfindungsgemäß in üblichen Mengen eingesetzt werden können.

In bevorzugten Ausführungsformen der erfindungsgemäßen Trennfolie umfasst die erste Zwischenschicht und/oder die zweite Zwischenschicht kein Antistatikum.

In bevorzugten Ausführungsformen der erfindungsgemäßen Trennfolie umfasst die erste Zwischenschicht und/oder die zweite Zwischenschicht unabhängig voneinander ein Antistatikum. Geeignete Antistatika sind einem Fachmann bekannt und kommerziell erhältlich.

Der Gewichtsanteil des Antistatikums liegt bevorzugt jeweils unabhängig voneinander im Bereich von 14±13 Gew.-%, bevorzugter 14±10 Gew.-%, noch bevorzugter 14±7 Gew.-%, am bevorzugtesten 14±4 Gew.-%, bezogen auf das Gesamtgewicht der ersten Zwischenschicht bzw. der zweiten Zwischenschicht.

Bevorzugt basiert das Antistatikum auf Polyether-Polyamid Block Copolymer. Solche Antistatika sind kommerziell erhältlich beispielsweise als CESA-stat. Bezüglich weiterer Einzelheiten kann beispielsweise auf DE 10 2010 025 938 A1 verwiesen werden. Es wurde überraschend gefunden, dass der Zusatz eines Antistatikums in der ersten bzw. zweiten Zwischenschicht die Anhaftung von Staub verringert.

In bevorzugten Ausführungsformen der erfindungsgemäßen Trennfolie enthält weder die erste Oberflächenschicht noch die zweite Oberflächenschicht Siliziumverbindungen.

Bevorzugt ist die erfindungsgemäßen Trennfolie planar, insbesondere nicht geprägt.

Die erfindungsgemäße Trennfolie ist bevorzugt nicht orientiert.

Die erfindungsgemäße Trennfolie weist typischerweise eine Maschinenrichtung (MD) und eine Querrichtung (CD) auf. Diese Begriffe sind einem Fachmann bekannt. Die "Maschinenrichtung" ist typischerweise die Richtung, in der eine Folie beim Produktionsprozess transportiert wird, die "Querrichtung" liegt typischerweise im Winkel von 90° zur "Maschinenrichtung".

Die erfindungsgemäße Trennfolie ist bevorzugt als solche thermoplastisch, d.h. sie ist bevorzugt im Wesentlichen vollständig aus thermoplastischen Polymeren (und ggf. Additiven) aufgebaut, d.h. enthält bevorzugt keine Duroplaste, Reaktivklebstoffe, etc.

Die erfindungsgemäße Trennfolie ist bevorzugt thermoverformbar, bevorzugt tiefziehfähig.

Der Begriff "tiefziehfähig" ist einem Fachmann bekannt. Zum Zwecke der Beschreibung bedeutet "tiefziehfähig" im Sinne der Erfindung bevorzugt
- eine Reißkraft von vorzugsweise mindestens 10 N, oder mindestens 12 N, oder mindestens 14 N, oder mindestens 16 N, oder mindestens 18 N, oder mindestens 20 N, oder mindestens 22 N, oder mindestens 24 N, oder mindestens 26 N, oder mindestens 28 N, oder mindestens 30 N; jeweils bevorzugt in Maschinenrichtung (MD); oder in Querrichtung (CD); oder in Maschinenrichtung und Querrichtung (MD und CD); und/oder
- ein Elastizitätsmodul von vorzugsweise mindestens 350 MPa, oder mindestens 370 MPa, oder mindestens 390 MPa oder mindestens 410 MPa oder mindestens 430 MPa, oder mindestens 450 MPa oder mindestens 470 MPa; jeweils bevorzugt in Maschinenrichtung (MD); oder in Querrichtung (CD); oder in Maschinenrichtung und Querrichtung (MD und CD); und/oder
- eine Bruchdehnung von vorzugsweise mindestens 350%, oder mindestens 375%, oder mindestens 400%, oder mindestens 425%, oder mindestens 450%, oder mindestens 475%, oder mindestens 500%, oder mindestens 525%, oder mindestens 550%, oder mindestens 575%, oder mindestens 600%, oder mindestens 625%, oder mindestens 650%, oder mindestens 675%, oder mindestens 700%, oder mindestens 725, oder mindestens 750%; jeweils bevorzugt in Maschinenrichtung (MD); oder in Querrichtung (CD); oder in Maschinenrichtung und Querrichtung (MD und CD); und/oder
- eine Zugkraft bei 25% Dehnung von vorzugsweise weniger als 15 N, oder weniger als 14 N, oder weniger als 13 N, oder weniger als 12 N, oder weniger als 11 N, oder weniger als 10 N, oder weniger als 9 N, oder weniger als 8 N, oder weniger als 7 N, oder weniger als 6 N, oder weniger als 5 N; jeweils bevorzugt in Maschinenrichtung (MD); oder in Querrichtung (CD); oder in Maschinenrichtung und Querrichtung (MD und CD);
jeweils gemessen nach DIN EN ISO 527 an einer 15 mm breiten Probe bei einer Einspannlänge von 100,00 mm, einer Vorkraft von 100 mN und einer Prüfgeschwindigkeit von 500 mm/min.

Die erfindungsgemäße Trennfolie ist bevorzugt kaltverformbar. Dabei bezieht sich der Begriff "kaltverformbar" bevorzugt auf eine Verformbarkeit bei Raumtemperatur (23°C).

Die erfindungsgemäße Trennfolie ist bevorzugt vakuumdicht. Zum Zwecke der Beschreibung bedeutet "vakuumdicht" im Sinne der Erfindung bevorzugt, dass ein innerhalb einer verschlossenen Hülle aus der Trennfolie angelegter Unterdruck für eine ausreichende Zeitdauer aufrechterhalten wird, ggf. unter kontinuierlichem Absaugen von Luft, so dass im Unterdruck (Vakuum) aus einem sich in dem inneren Raum befindlichen Halbzeug ein Formteil hergestellt werden kann. Umfasst das Herstellen des erfindungsgemäßen Formteils beispielsweise das Aushärten eines Kunststoffmaterials im Vakuum und ggf. unter Wärmezufuhr, so reicht die Vakuumdichtigkeit der erfindungsgemäßen Trennfolie dazu aus, den Unterdruck im inneren Raum so lange aufrechtzuerhalten, bis das Kunststoffmaterial zumindest teilweise, vorzugsweise vollständig ausgehärtet ist, ggf. unter kontinuierlichem Absaugen von Luft.

Bevorzugt beträgt die Luftdurchlässigkeit der erfindungsgemäßen Trennfolie gemäß ISO 15105-1:2007 höchstens 2200 cm³ mm/m² Tag bar, bevorzugter höchstens 2100 cm³ mm/m² Tag bar, noch bevorzugter höchstens 2000 cm³ mm/m² Tag bar, am bevorzugtesten höchstens 1900 cm³ mm/m² Tag bar und insbesondere höchstens 1800 cm³ mm/m² Tag bar. Bevorzugt liegen auch die Sauerstoffdurchlässigkeit und/oder die Stickstoffdurchlässigkeit innerhalb der vorstehend genannten Bereiche.

Bevorzugt weist die erfindungsgemäße Trennfolie eine Gesamtschichtdicke im Bereich von 40±30 µm auf; bevorzugt 40±25 µm, bevorzugter 40±20 µm, noch bevorzugter 40±15 µm, noch mehr bevorzugt 40±10 µm, am bevorzugtesten 40±5 µm.

Geeignete Methoden zur Bestimmung der Gesamtschichtdicke von Trennfolien sowie zur Bestimmung der Schichtdicke einzelner Schichten innerhalb der Trennfolie sind einem Fachmann bekannt. Erfindungsgemäß bevorzugt erfolgt die Bestimmung mikroskopisch am Mikrotomschnitt, wobei der Messwert als Mittelwert von insgesamt 10 Messungen angegeben wird.

In bevorzugten Ausführungsformen ist die erfindungsgemäße Trennfolie transparent. Der Begriff "transparent" im Sinne der Erfindung bedeutet, dass ein Faserverbundkunststoff-Halbzeug durch die erfindungsgemäße Trennfolie hindurch mit bloßem Auge betrachtet werden kann. Die Transparenz wird bevorzugt mit Hilfe von Densitometern quantifiziert. Derartige Methoden sind dem Fachmann geläufig. Bevorzugt kann als Maß für die Transparenz die Trübung als optischer Wert gemessen werden. Die Messung der Trübung erfolgt bevorzugt nach der ASTM-Prüfnorm D 1003-61 m, Procedure A, nach Eichung des Messgerätes mit Trübungsnormalen zwischen 0,3 und 34% Trübung. Als Messinstrument eignet sich beispielsweise ein Hazemeter der Fa. Byk-Gardner mit Ulbricht-Kugel, das in einem Raumwinkel von 8° bis 160° eine integrierte Messung der diffusen Lichtdurchlässigkeiten gestattet. Die erfindungsgemäßen Trennfolien weisen bevorzugt eine nach dem vorstehend beschriebenen Verfahren bestimmte Trübung (Haze) von weniger als 100%, bevorzugter weniger als 96%, noch bevorzugter weniger als 92%, am bevorzugtesten weniger als 88% und insbesondere weniger als 84% auf; und/oder eine Transparenz von mehr als 45%, bevorzugt mehr als 50%, bevorzugter mehr als 55%, noch bevorzugter mehr als 60%, am bevorzugtesten mehr als 65% auf; und/oder eine Klarheit (Clarity) von mehr als 8%, bevorzugt mehr als 10%, bevorzugter mehr als 12%, noch bevorzugter mehr als 14%, am bevorzugtesten mehr als 16% auf.

In anderen bevorzugten Ausführungsformen ist die erfindungsgemäße Trennfolie blickdicht.

Die erfindungsgemäße Trennfolie kann durch herkömmliche Verfahren hergestellt werden, die zum Herstellen mehrschichtiger Folien nützlich sind, bevorzugt Extrusionsverfahren, insbesondere Blasfoliencoextrusion oder Gießfolienextrusion, wobei Blasfoliencoextrusion besonders bevorzugt ist.

Ein weiterer Aspekt der Erfindung betrifft ein Verfahren zur Herstellung eines Faserverbundkunststoff-Bauteils aus einem härtbaren Faserverbundkunststoff-Halbzeug umfassend die Schritte:
(a) Bereitstellen einer Form zur Herstellung eines Faserverbundkunststoff-Bauteils, wobei die Form eine Gestaltung aufweist, welche wenigstens in einem Abschnitt der Gestaltung des mit der Form herzustellenden Faserverbundkunststoff-Bauteils entspricht;
(b) Einbringen der erfindungsgemäßen, vorstehend beschriebenen Trennfolie in die Form, wobei die Trennfolie wenigstens in dem Abschnitt, welcher der Gestaltung des mit der Form herzustellenden Faserverbundkunststoff-Bauteils entspricht, die Form auskleidet; und wobei die erste Oberflächenschicht der Trennfolie der Form zugewandt ist;
(c) ggf. Tiefziehen der Trennfolie;
(d) Einbringen des härtbaren Faserverbundkunststoff-Halbzeugs in die Form, wobei die zweite Oberflächenschicht der Trennfolie dem härtbaren Faserverbundkunststoff-Halbzeug zugewandt ist;
(e) ggf. Verschließen und/oder Evakuieren der Form;
(f) Erwärmen der Form auf eine Temperatur, bei welcher das härtbare Faserverbundkunststoff-Halbzeug aushärtet; ggf. unter Druck;
(g) ggf. Abkühlen des ausgehärteten Faserverbundkunststoff-Bauteils;
(h) ggf. Entnehmen des ausgehärteten Faserverbundkunststoff-Bauteils zusammen mit der daran anhaftenden Trennfolie aus der Form; und
(i) ggf. Ablösen der Trennfolie von dem ausgehärteten Faserverbundkunststoff-Bauteil.

Bei der Herstellung des Faserverbundkunststoff-Bauteils wird das mit dem auszuhärtenden Kunststoffharz, vorzugsweise einem auszuhärtenden Epoxidharz, getränkte Faserverbundkunststoff-Halbzeug in Schritt (d) in die Form eingebracht und in Schritt (e) vakuumdicht verschlossen. Durch Anlegen eines Vakuums wird die erfindungsgemäße Trennfolie unter Verdichtung des Fasermaterials zusammengepresst. Unter Beibehaltung des Vakuums wird die Form mit dem verformten Laminat in einem Autoklaven unter Erhitzen auf die Aushärtungstemperatur des auszuhärtenden Kunststoffharzes gebracht und für die gesamte Aushärtungszeit, meist über Stunden, aufrecht erhalten.

Neben dem Verfahren mit einem Autoklaven kann auch mit Pressdruck oder nur unter Atmosphärendruck gearbeitet werden (d.h. Härtung im Ofen). Außerdem kann die Härtung auch mittels Einwirkung von Mikrowellenstrahlung erreicht werden.

Nach der Aushärtungszeit und dem Abkühlen in Schritt (g) wird das Faserverbundkunststoff-Bauteil in Schritt (h) der Form entnommen und möglichst unter Ausschluss von Feuchtigkeitseinwirkung bis zur Endanwendung verpackt.

Bevorzugt enthält das Faserverbundkunststoff-Bauteil ein weiteres Material welches ausgewählt ist aus Balsaholz, technischen Schaumstoffen, Glasvlies, Carbonfasern, Glasfasern, und Kombinationen daraus.

Bevorzugt enthält das Faserverbundkunststoff-Halbzeug ein härtbares Epoxidharz oder ein härtbares Polyesterharz; bevorzugt ein härtbares Epoxidharz.

Bevorzugt ist das Faserverbundkunststoff-Bauteil für ein Transportmittel bestimmt, vorzugsweise für ein Flugzeug, ein Raumfahrzeug, einen Zug oder ein Kraftfahrzeug, oder für ein Windrad bestimmt ist, vorzugsweise für einen Rotorflügel.

Ein weiterer Aspekt der Erfindung betrifft ein Faserverbundkunststoff-Bauteil, an dessen äußerer Oberfläche wenigstens in einem Teilbereich die erfindungsgemäße, vorstehend beschriebene Trennfolie haftet und davon ablösbar ist, vorzugsweise rückstandsfrei, wobei die zweite Oberflächenschicht der Trennfolie dem Faserverbundkunststoff-Bauteil zugewandt ist.

Dabei ist das Faserverbundkunststoff-Bauteil bevorzugt für ein Transportmittel bestimmt, vorzugsweise für ein Flugzeug, ein Raumfahrzeug, einen Zug oder ein Kraftfahrzeug, oder für ein Windrad, vorzugsweise für einen Rotorflügel.

Ein weiterer Aspekt der Erfindung betrifft die Verwendung der erfindungsgemäßen, vorstehend beschriebenen Trennfolie als Trennfolie, bevorzugt zur Herstellung eines Faserverbundkunststoff-Bauteils, besonders bevorzugt im erfindungsgemäßen, vorstehend beschriebenen Verfahren.

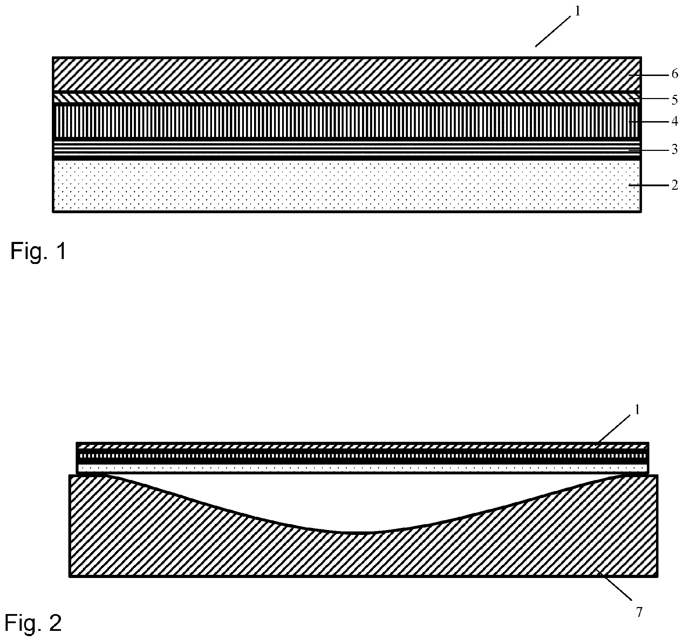

Abbildung 1 zeigt eine erfindungsgemäße Trennfolie (1) im Querschnitt mit einem schematisierten, bevorzugten Schichtaufbau aus erster Oberflächenschicht (2), Haftvermittlerschicht (3), erster Zwischenschicht (4), zweiter Zwischenschicht (5) und zweiter Oberflächenschicht (6).

Abbildung 2 zeigt schematisch, wie die erfindungsgemäße Trennfolie (1) in eine Form (7) zur Herstellung eines Faserverbundkunststoff-Bauteils eingebracht wird, wobei die erste Oberflächenschicht (2) der Trennfolie (1) der Form (7) zugewandt ist. Ein Fachmann erkennt, dass die erfindungsgemäße Trennfolie (1) üblicherweise keine so stark ausgeprägte Steifigkeit aufweist, dass sie die Form (7) - wie gezeigt - planar verschließt. Vielmehr weist die erfindungsgemäße Trennfolie (1) typischerweise eine gewisse Flexibilität aus, so dass sie sich bereits in gewisser Weise der Gestaltung der Form (7) anpasst, ohne dass dazu besondere Maßnahmen erforderlich sind. Ein passgenaues Anschmiegen der Trennfolie (1) an die Form (7) erfolgt erfindungsgemäße bevorzugt jedoch erst durch Tiefziehen, etwa nach Anlegen eines Vakuums zwischen Form (7) und Trennfolie (1).

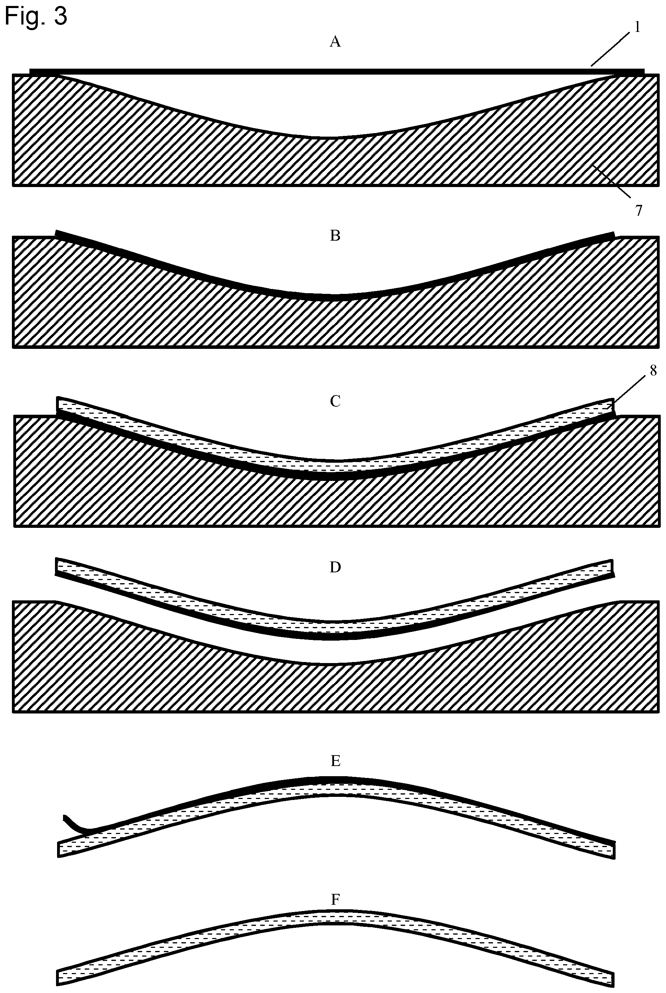

Abbildung 3 zeigt schematisch, wie die erfindungsgemäße Trennfolie (1) zur Herstellung eines Faserverbundkunststoff-Bauteils aus einem härtbaren Faserverbundkunststoff-Halbzeug (8) eingesetzt werden kann. Abbildung 3A entspricht der Anordnung gemäß Abbildung 2, d.h. vor dem Tiefziehen der Trennfolie. Abbildung 3B zeigt die tiefgezogene Trennfolie (1) in der Form (7). Abbildung 3C zeigt, wie das härtbare Faserverbundkunststoff-Halbzeug (8) auf der Trennfolie (1) aufgebracht wird, wobei die zweite Oberflächenseite der Trennfolie (1) dem härtbaren Faserverbundkunststoff-Halbzeug (8) zugewandt ist. Abbildung 3D zeigt, wie das ausgehärtete Faserverbundkunststoff-Halbzeug zusammen mit der daran haftenden Trennfolie (1) aus der Form (7) entnommen wird. Figur 3E zeigt, wie die Trennfolie (1) von dem ausgehärteten Faserverbundkunststoff-Halbzeug abgelöst werden kann. Abbildung 3E zeigt schließlich das fertige, ausgehärtete Faserverbundkunststoff-Halbzeug mit freigelegter Oberfläche.

Bezugszeichenliste:
(1) Trennfolie
(2) erste Oberflächenschicht
(3) Haftvermittlerschicht
(4) erste Zwischenschicht
(5) zweite Zwischenschicht
(6) zweite Oberflächenschicht
(7) Form zur Herstellung eines Faserverbundkunststoff-Bauteils
(8) härtbares Faserverbundkunststoff-Halbzeug

Die nachfolgenden Beispiele dienen der Erläuterung der Erfindung, sind jedoch nicht einschränkend auszulegen:

### Beispiele 1 - 3:

Es wurden drei Trennfolien folgenden Aufbaus und folgender Zusammensetzung hergestellt:

| Beispiel | | | 1 | | 2 | | 3 | |
|---|---|---|---|---|---|---|---|---|
| Schicht | Polymer/Additiv | Handelsname | % | µm | % | µm | % | µm |
| erste Oberflächenschicht | thermoplastisches Elastomer | Hytrel^{®} G4078 NC010 | 72 | 9 | 72 | 9 | 72 | 14 |
| | Polyolefin | Dowlex^{®} NG 5056 G | 10 | | 10 | | 10 | |
| | Additivmischung | | 18 | | 18 | | 18 | |
| Haftvermittlerschicht | Ethylen-Acrylat Copolymer | Bynel^{®} 22E 780 | 98 | 3 | 98 | 3 | 98 | 3 |
| | Additivmischung | | 2 | | 2 | | 2 | |
| erste Zwischenschicht | 3. hetero PP | Adflex^{®} Q100F | 34 | 9 | 58 | 9 | 58 | 9 |
| | 4. hetero PP | Borsoft^{®} SA 233 CF | 48 | | 40 | | 40 | |
| | Antistatikum | CESA^{®} stat | 14 | | - | | - | |
| | Additivmischung | | 4 | | 2 | | 2 | |
| zweite Zwischenschicht | 5. hetero PP | Adflex^{®} Q100F | 34 | 5 | 56 | 5 | 56 | 5 |
| | 6. hetero PP | Borsoft^{®} SA 233 CF | 50 | | 40 | | 40 | |
| | Antistatikum | CESA^{®} stat | 14 | | - | | - | |
| | Additivmischung | | 2 | | 4 | | 4 | |
| zweite Oberflächenschicht | 1. hetero PP | Adflex^{®} Q 100 F | 20 | 14 | 20 | 14 | 20 | 14 |
| | 2. hetero PP | Borealis^{®} BA110CF | 68 | | 68 | | 68 | |
| | Additivmischung | | 12 | | 12 | | 12 | |

| | | | | | | | | |
|---|---|---|---|---|---|---|---|---|
| Alle Prozentangaben sind Gew.-%. | | | | | | | | |

Die Folien gemäß Beispielen 1 und 2 zeigten kein Curling und lagen flach. Die mechanischen Eigenschaften dieser beiden Folien wurden näher untersucht. Die nachfolgenden Tabellen zeigen die Messergebnisse der mechanischen Prüfung der Trennfolien (Beispiele 1 - 2), jeweils gemessen in Maschinenrichtung (MD) und Querrichtung (CD), jeweils bestimmt nach DIN EN ISO 527 an einer 15 mm breiten Probe; Einspannlänge: 100,00 mm, Vorkraft: 100 mN, Prüfgeschwindigkeit: 500 mm/min:
Messergebnisse für E-Modul, Bruchdehnung, Reißkraft- und Festigkeit und Dicke

| Beispiel | E-Modul [MPa] | Bruchdehnung [%] | Reißkraft [N] | Reißfestigkeit [MPa] | Dicke [µm] |
|---|---|---|---|---|---|
| Beispiel 1 (MD) | 411,9 ± 26,6 | 550,9 ± 32,9 | 29,6 ± 1,3 | 46 ± 1,8 | 43 ± 0,9 |
| Beispiel 1 (CD) | 461,8 ± 16,3 | 737,5 ± 51,1 | 20,1 ± 1,5 | 31,3 ± 2,7 | 43 ± 1,4 |
| Beispiel 2 (MD) | 400,1 ± 36,8 | 431,0 ± 15,3 | 21,4 ± 0,8 | 42,6 ± 3,0 | 33,7 ± 1,2 |
| Beispiel 2 (CD) | 373,0 ± 20,3 | 645 ± 2,5 | 13,6 ± 0,6 | 26,7 ± 2,3 | 34,1 ± 1,7 |

Messergebnisse für Zugkraft und Dehnung

| Beispiel | F 1% [N] | F 2,5% [N] | F 5% [N] | F 10% [N] | F 25% [N] |
|---|---|---|---|---|---|
| Beispiel 1 (MD) | 2,8 ± 0,2 | 5,9 ± 0,1 | 7,7 ± 0,1 | 9,5 ± 0,2 | 11,5 ± 0,3 |
| Beispiel 1 (CD) | 3,5 ± 0,0 | 6,2 ± 0,0 | 7,7 ± 0,0 | 8,9 ± 0,1 | 9,3 ± 0,1 |
| Beispiel 2 (MD) | 2,5 ± 0,1 | 4,5 ± 0,3 | 6,1 ± 0,4 | 7,9 ± 0,5 | 10,3 ± 0,6 |
| Beispiel 2 (CD) | 2,4 ± 0,2 | 4,4 ± 0,2 | 5,7 ± 0,3 | 6,8 ± 0,3 | 7,2 ± 0,3 |

Zusätzlich wurde die Luftdurchlässigkeit der Folien gemäß Beispiel 1 und Beispiel 2 gemessen. Die Messung erfolgte gemäß ISO 15105-1 (2007-10) bei 23°C mit Luft. Die relative Feuchte betrug 0%. Die glatte Seite der Trennfolie wurde jeweils dem Prüfgas (Luft) zugewandt. Die Messergebnisse sind in nachfolgender Tabelle zusammengefasst:
Messergebnisse für Luftdurchlässigkeit

| Beispiel | Messung 1 | | Messung 2 | Dicke Prüfling Messung 1 [µm] | | | Dicke Prüfling Messung 2 [µm] | | |
|---|---|---|---|---|---|---|---|---|---|
| | [cm3 mm/m² Tag bar] | | | Mittelwert | min | max | Mittelwert | min | max |
| Beispiel 1 | 1900 | 1700 | | 42 | 40 | 44 | 42 | 39 | 43 |
| Beispiel 2 | 1800 | 1800 | | 46 | 44 | 48 | 44 | 40 | 48 |

Darüber hinaus wurde auch die Transparenz der Folien gemäß Beispiel 1 und Beispiel 2 gemessen. Die Messung erfolgte gemäß ISO sowie gemäß ASTM. Die Messergebnisse sind in nachfolgender Tabelle zusammengefasst.
Messergebnisse für Trübung

| [%] | Haze Gard (nach ISO ) | | Haze Gard (nach ASTM ) | | |
|---|---|---|---|---|---|
| | Transparenz | Trübung (*haze*) | Transparenz | Trübung (*haze*) | Klarheit (*clarity*) |
| Beispiel 1 | 64,7 | 86,6 | 66,5 | 94,1 | 13,0 |
| Beispiel 2 | 47,9 | 93,0 | 50,4 | 100,0 | 10,8 |

## Patentansprüche

1. Eine mehrschichtige Trennfolie (1) umfassend
- eine erste Oberflächenschicht (2) basierend auf einer Mischung von einem thermoplastischen Elastomer und einem Polyolefin; wobei der Gewichtsanteil des thermoplastischen Elastomers größer ist als der Gewichtsanteil des Polyolefins;
- eine Haftvermittlerschicht (3);
- ggf. eine erste Zwischenschicht (4);
- ggf. eine zweite Zwischenschicht (5); und
- eine zweite Oberflächenschicht (6) basierend auf wenigstens einem Polypropylen oder Propylencopolymer;
wobei die Trennfolie (1) eine Gesamtschichtdicke im Bereich von 10 bis 250 µm aufweist.

2. Die Trennfolie (1) nach Anspruch 1, wobei das thermoplastische Elastomer in der ersten Oberflächenschicht (2) ein thermoplastisches Polyesterelastomer ist.

3. Die Trennfolie (1) nach Anspruch 1 oder 2, wobei das thermoplastische Elastomer in der ersten Oberflächenschicht (2) eine DSC Schmelztemperatur gemäß ISO 11357-3 aufweist von mindestens 150°C; bevorzugt mindestens 155°C, bevorzugter mindestens 160°C, noch bevorzugter mindestens 165 °C.

4. Die Trennfolie (1) nach einem der vorstehenden Ansprüche, wobei das Polyolefin in der ersten Oberflächenschicht (2) ein Polyethylen oder ein Ethylencopolymer ist; bevorzugt ein LLDPE.

5. Die Trennfolie (1) nach einem der vorstehenden Ansprüche, wobei das wenigstens eine Polypropylen oder Propylencopolymer in der zweiten Oberflächenschicht (6) wenigstens ein heterophasisches Polypropylen ist.

6. Die Trennfolie (1) nach einem der vorstehenden Ansprüche, wobei das wenigstens eine Polypropylen oder Propylencopolymer in der zweiten Oberflächenschicht (6) eine Mischung von einem ersten heterophasischen Polypropylen und einem davon verschiedenen zweiten heterophasischen Polypropylen ist.

7. Die Trennfolie (1) nach einem der vorstehenden Ansprüche, welche thermoverformbar, bevorzugt tiefziehfähig ist.

8. Die Trennfolie (1) nach einem der vorstehenden Ansprüche, welche kaltverformbar ist.

9. Verwendung der Trennfolie (1) nach einem der vorstehenden Ansprüche als Trennfolie.

10. Die Verwendung nach Anspruch 9, zur Herstellung eines Faserverbundkunststoff-Bauteils aus einem härtbaren Faserverbundkunststoff-Halbzeug (8).

11. Ein Verfahren zur Herstellung eines Faserverbundkunststoff-Bauteils aus einem härtbaren Faserverbundkunststoff-Halbzeug (8) umfassend die Schritte:
(a) Bereitstellen einer Form (7) zur Herstellung eines Faserverbundkunststoff-Bauteils, wobei die Form (7) eine Gestaltung aufweist, welche wenigstens in einem Abschnitt der Gestaltung des mit der Form (7) herzustellenden Faserverbundkunststoff-Bauteils entspricht;
(b) Einbringen einer Trennfolie (1) nach einem der Ansprüche 1 bis 8 in die Form (7), wobei die Trennfolie (1) wenigstens in dem Abschnitt, welcher der Gestaltung des mit der Form (7) herzustellenden Faserverbundkunststoff-Bauteils entspricht, die Form (7) auskleidet; und wobei die erste Oberflächenschicht (2) der Trennfolie (1) der Form (7) zugewandt ist;
(c) ggf. Tiefziehen der Trennfolie (1);
(d) Einbringen des härtbaren Faserverbundkunststoff-Halbzeugs (8) in die Form (7), wobei die zweite Oberflächenschicht (6) der Trennfolie (1) dem härtbaren Faserverbundkunststoff-Halbzeug (8) zugewandt ist;
(e) ggf. Verschließen und/oder Evakuieren der Form (7); ggf. unter Tiefziehen der Trennfolie (i);
(f) Erwärmen der Form (7) auf eine Temperatur, bei welcher das härtbare Faserverbundkunststoff-Halbzeug (8) aushärtet; ggf. unter Druck;
(g) ggf. Abkühlen des ausgehärteten Faserverbundkunststoff-Bauteils;
(h) ggf. Entnehmen des ausgehärteten Faserverbundkunststoff-Bauteils zusammen mit der daran anhaftenden Trennfolie (1) aus der Form (7); und
(i) ggf. Ablösen der Trennfolie (1) von dem ausgehärteten Faserverbundkunststoff-Bauteil.

12. Das Verfahren nach Anspruch 11, wobei das Faserverbundkunststoff-Bauteil ein weiteres Material enthält welches ausgewählt ist aus Balsaholz, technischen Schaumstoffen, Glasvlies, Carbonfasern, Glasfasern, und Kombinationen daraus.

13. Das Verfahren nach einem der Anspruch 11 oder 12, wobei das Faserverbundkunststoff-Bauteil für ein Transportmittel bestimmt ist, vorzugsweise für ein Flugzeug, ein Raumfahrzeug, einen Zug oder ein Kraftfahrzeug, oder für ein Windrad bestimmt ist, vorzugsweise für einen Rotorflügel.

14. Das Verfahren nach einem der Ansprüche 11 bis 13, wobei das härtbare Faserverbundkunststoff-Halbzeug ein härtbares Epoxidharz oder ein härtbares Polyesterharz enthält; bevorzugt ein härtbares Epoxidharz.

15. Ein Faserverbundkunststoff-Bauteil, an dessen äußerer Oberfläche wenigstens in einem Teilbereich eine Trennfolie (1) nach einem der Ansprüche 1 bis 8 haftet und davon ablösbar ist, wobei die zweite Oberflächenschicht (6) der Trennfolie (1) dem Faserverbundkunststoff-Bauteil zugewandt ist.

## Claims

1. A multilayer release film (1) comprising
- a first surface layer (2) based on a mixture of a thermoplastic elastomer and a polyolefin; wherein the weight proportion of the thermoplastic elastomer is greater than the weight proportion of the polyolefin;
- an adhesive layer (3);
- optionally, a first intermediate layer (4);
- optionally, a second intermediate layer (5); and
- a second surface layer (6) based on at least one polypropylene or propylene copolymer;
wherein the release film (1) has a total layer thickness in the range of 10 to 250 µm.

2. The release film (1) according to claim 1, wherein the thermoplastic elastomer in the first surface layer (2) is a thermoplastic polyester elastomer.

3. The release film (1) according to claim 1 or 2, wherein the thermoplastic elastomer in the first surface layer (2) has a DSC melting temperature according to ISO 11357-3 of at least 150°C; preferably at least 155°C, more preferably at least 160°C, even more preferably at least 165°C.

4. The release film (1) according to one of the preceding claims, wherein the polyolefin in the first surface layer (2) is a polyethylene or an ethylene copolymer; preferably an LLDPE.

5. The release film (1) according to one of the preceding claims, wherein the at least one polypropylene or propylene copolymer in the second surface layer (6) is at least one heterophasic polypropylene.

6. The release film (1) according to one of the preceding claims, wherein the at least one polypropylene or propylene copolymer in the second surface layer (6) is a mixture of a first heterophasic polypropylene and a second heterophasic polypropylene different therefrom.

7. The release film (1) according to one of the preceding claims, which is thermoformable, preferably deep-drawable.

8. The release film (1) according to one of the preceding claims, which is cold-formable.

9. Use of the release film (1) according to one of the preceding claims as a release film.

10. The use according to claim 9, for the production of a fiber-reinforced plastic component from a curable fiber-reinforced plastic semi-finished product (8).

11. A method for producing a fiber-reinforced plastic component from a curable fiber-reinforced plastic semi-finished product (8), comprising the steps:
(a) providing a mold (7) for manufacturing a fiber-reinforced plastic component, wherein the mold (7) has a configuration that corresponds at least in one section to the configuration of the fiber-reinforced plastic component to be manufactured with the mold (7);
(b) inserting a release film (1) according to one of claims 1 to 8 into the mold (7), wherein the release film (1) lines the mold (7) at least in the section which corresponds to the configuration of the fiber-reinforced plastic component to be produced with the mold (7); and wherein the first surface layer (2) of the release film (1) faces the mold (7);
(c) optionally, deep drawing of the release film (1);
(d) inserting the curable fiber-reinforced plastic semi-finished product (8) into the mold (7), wherein the second surface layer (6) of the release film (1) faces the curable fiber-reinforced plastic semi-finished product (8);
(e) optionally, sealing and/or evacuating the mold (7); optionally, deep drawing the release film (i);
(f) heating the mold (7) to a temperature at which the curable fiber-reinforced plastic semi-finished product (8) cures; optionally, under pressure;
(g) optionally, cooling the cured fiber-reinforced plastic component;
(h) optionally, removing the cured fiber-reinforced plastic component together with the release film (1) adhering to it from the mold (7); and
(i) optionally, removing the release film (1) from the cured fiber-reinforced plastic component.

12. The method according to claim 11, wherein the fiber-reinforced plastic component contains a further material selected from balsa wood, engineering foams, glass fleece, carbon fibers, glass fibers, and combinations thereof.

13. The method according to one of claims 11 or 12, wherein the fiber-reinforced plastic component is intended for a means of transport, preferably for an aircraft, a spacecraft, a train, or a motor vehicle, or is intended for a wind turbine, preferably for a rotor blade.

14. The method according to one of claims 11 to 13, wherein the curable fiber-reinforced plastic semi-finished product contains a curable epoxy resin or a curable polyester resin; preferably a curable epoxy resin.

15. A fiber-reinforced plastic component, on whose outer surface, at least in a partial area, a release film (1) according to one of claims 1 to 8 adheres and can be removed therefrom, wherein the second surface layer (6) of the release film (1) faces the fiber-reinforced plastic component.

## Revendications

1. Film de séparation multicouche (1) comprenant
- une première couche superficielle (2) à base d'un mélange d'un élastomère thermoplastique et d'une polyoléfine; la proportion en poids de l'élastomère thermoplastique étant supérieure à la proportion en poids de la polyoléfine;
- une couche d'agent adhésif (3);
- le cas échéant, une première couche intermédiaire (4);
- le cas échéant, une deuxième couche intermédiaire (5); et
- une deuxième couche superficielle (6) à base d'au moins un copolymère de polypropylène ou de propylène;
la feuille de séparation (1) ayant une épaisseur totale comprise entre 10 et 250 µm.

2. Film de séparation (1) selon la revendication 1, dans lequel l'élastomère thermoplastique dans la première couche superficielle (2) est un élastomère polyester thermoplastique.

3. Film de séparation (1) selon la revendication 1 ou 2, dans lequel l'élastomère thermoplastique dans la première couche superficielle (2) présente une température de fusion DSC selon ISO 11357-3 d'au moins 150 °C, de préférence d'au moins 155 °C, de préférence d'au moins 160 °C, encore de préférence d'au moins 165 °C.

4. Le film de séparation (1) selon l'une des revendications précédentes, dans lequel la polyoléfine dans la première couche superficielle (2) est un polyéthylène ou un copolymère d'éthylène, de préférence un LLDPE.

5. Le film de séparation (1) selon l'une des revendications précédentes, dans lequel le au moins un polypropylène ou copolymère de propylène dans la deuxième couche superficielle (6) est au moins un polypropylène hétérophasique.

6. Film de séparation (1) selon l'une des revendications précédentes, dans lequel le au moins un copolymère de polypropylène ou de propylène dans la deuxième couche superficielle (6) est un mélange d'un premier polypropylène hétérophasique et d'un deuxième polypropylène hétérophasique différent de celui-ci.

7. Film de séparation (1) selon l'une des revendications précédentes, qui est thermoformable, de préférence emboutissable.

8. Film de séparation (1) selon l'une des revendications précédentes, qui est thermoformable à froid.

9. Utilisation du film de séparation (1) selon l'une des revendications précédentes comme film de séparation.

10. Utilisation selon la revendication 9, pour la fabrication d'un composant en plastique renforcé de fibres à partir d'un produit semi-fini en plastique renforcé de fibres durcissable (8).

11. Procédé de fabrication d'un composant en plastique renforcé de fibres à partir d'un produit semi-fini en plastique renforcé de fibres durcissable (8), comprenant les étapes suivantes:
(a) la fourniture d'un moule (7) pour la fabrication d'un composant en plastique renforcé de fibres, le moule (7) présentant une configuration qui correspond au moins dans une partie de la configuration du composant en plastique renforcé de fibres à fabriquer avec le moule (7);
(b) introduction d'un film de séparation (1) selon l'une des revendications 1 à 8 dans le moule (7), la feuille de séparation (1) revêtant le moule (7) au moins dans la partie qui correspond à la configuration de l'élément en plastique renforcé de fibres à fabriquer à l'aide du moule (7); et la première couche superficielle (2) de la feuille de séparation (1) étant tournée vers le moule (7);
(c) éventuellement, thermoformage du film de séparation (1);
(d) introduction du produit semi-fini en plastique renforcé de fibres (8) dans le moule (7), la deuxième couche superficielle (6) du film de séparation (1) étant tournée vers le produit semi-fini en plastique renforcé de fibres (8);
(e) le cas échéant, fermeture et/ou évacuation du moule (7); le cas échéant, thermoformage du film de séparation (i);
(f) chauffage du moule (7) à une température à laquelle le produit semi-fini en plastique renforcé de fibres durcissable (8) durcit; le cas échéant, sous pression;
(g) le cas échéant, refroidissement du composant en plastique renforcé de fibres durci;
(h) le cas échéant, retrait du composant en plastique renforcé de fibres durci avec le film de séparation (1) qui y adhère du moule (7); et
(i) le cas échéant, détacher le film de séparation (1) de l'élément en plastique renforcé de fibres durci.

12. Procédé selon la revendication 11, dans lequel le composant en plastique renforcé de fibres contient un autre matériau choisi parmi le bois de balsa, les mousses techniques, le voile de verre, les fibres de carbone, les fibres de verre et leurs combinaisons.

13. Procédé selon l'une des revendications 11 ou 12, dans lequel le composant en plastique renforcé de fibres est destiné à un moyen de transport, de préférence à un avion, un engin spatial, un train ou un véhicule automobile, ou à une éolienne, de préférence à une pale de rotor.

14. Procédé selon l'une des revendications 11 à 13, dans lequel le produit semi-fini en plastique renforcé de fibres durcissable contient une résine époxy durcissable ou une résine polyester durcissable, de préférence une résine époxy durcissable.

15. Composant en plastique renforcé de fibres, sur la surface extérieure duquel, au moins dans une zone partielle, un film de séparation (1) selon l'une des revendications 1 à 8 adhère et peut être détaché, la deuxième couche superficielle (6) du film de séparation (1) étant tournée vers le composant en plastique renforcé de fibres.
